# FASCICULE DE BREVET EUROPEEN

(11) **EP 3 880 514 B1**
(45) Date de publication et mention de la délivrance du brevet: **07.09.2022**
(21) Numéro de dépôt: 19802243.6
(22) Date de dépôt: 03.10.2019
(51) Int. Cl.: B60P 3/077, B60P 7/135, B60P 3/08, B60P 7/08

(54) **SUPPORT DE CHARGE DESTINE A ETRE POSITIONNE, VERROUILLE ET DEVERROUILLE SUR UNE STRUCTURE PORTEUSE PAR UN ENSEMBLE ADAPTE**
LASTTRÄGER ZUR POSITIONIERUNG, VERRIEGELUNG UND ENTRIEGELUNG AUF EINER TRAGENDEN STRUKTUR DURCH EINE GEEIGNETE ANORDNUNG
LOAD SUPPORT INTENDED TO BE POSITIONED ON, LOCKED ON AND UNLOCKED FROM A BEARING STRUCTURE BY A SUITABLE ASSEMBLY

(30) Priorité: 12.11.2018 FR 1860443
(43) Date de publication de la demande: 22.09.2021
(73) Titulaire: Lohr Industrie, 67980 Hangenbieten (FR)
(72) Inventeur: ANDRE, Jean-Luc, 67120 MOLSHEIM (FR)
(74) Mandataire: Merckling, Norbert
(86) Numéro de dépôt international: PCT/FR2019/052343
(87) Numéro de publication internationale: WO 2020/099741

(56) Documents cités:
- WO-A2-2015/055967
- FR-A1- 3 021 604
- US-A- 5 525 026

## Description

### Domaine technique

La présente invention se rapporte au domaine technique général du transport de fret et notamment du transport de charges disposées sur des supports de charge de type palette de chargement. Ces charges sont par exemple des voitures présentant des gabarits identiques ou différents.

L'invention concerne plus particulièrement un support de charge comportant un dispositif amélioré pour sa fixation de manière amovible sur une structure porteuse à parois verticales, ainsi qu'un ensemble de positionnement, de verrouillage et de déverrouillage dudit support de charge sur une structure porteuse délimitant un espace de chargement. Un tel ensemble peut avantageusement équiper un véhicule routier du genre fourgon, remorque, semi-remorque, convoi articulé, un conteneur destiné à être chargé sur une semi-remorque, sur un porte-conteneur, sur un wagon, sur un avion, ou équiper des équipements de stockage dans des dépôts ou usines par exemple. Il peut également équiper un véhicule ferroviaire, par exemple un wagon porte-voitures.

### Etat de la technique

On connaît par exemple par l'intermédiaire du document FR 3021604 un dispositif de verrouillage/déverrouillage d'un support de charge sous la forme d'une palette sur une structure porteuse dans une position déterminée. Ce dispositif comporte des moyens d'activation pour activer et désactiver le verrouillage et l'immobilisation de la palette. Ces moyens d'activation comprennent notamment des plots mobiles montés coulissant dans des longerons de chaque côté latéral de la palette, lesdits plots étant aptes à s'engager dans des orifices ménagés dans la structure porteuse. Les moyens d'activation comprennent également des organes d'entraînement montés dans les longerons de la palette pour déplacer lesdits plots entre une position escamotée qui correspond au déverrouillage et une position en saillie latérale sur les longerons qui correspond au verrouillage, ainsi que des moyens d'actionnement amovibles susceptibles d'être disposés sur ou dans la palette, dans une position de coopération mécanique avec les organes d'entraînement pour commander le déplacement des plots

Selon ce document, les moyens d'actionnement sont portés par deux préhenseurs articulés sur un manipulateur automatisé, se déplaçant le long de la structure porteuse, lesdits préhenseurs comportant des moyens d'accrochage pour saisir le support de charge au niveau de ses longerons longitudinaux et pour permettre au manipulateur automatisé de déplacer, orienter et déposer le support de charge dans une position de chargement définie sur la structure porteuse.

Par position de chargement, on entend une position dans laquelle le support de charge est immobilisé sur la structure porteuse, selon une position et une orientation adaptée pour transporter une charge, généralement de manière à optimiser la quantité globale de charges transportée par l'ensemble des supports de charge. Cette position de chargement ne doit pas être confondue avec une position dans laquelle la structure porteuse est par exemple déposée au sol pour recevoir sa charge à transporter.

Dans le cas préféré où la palette est prévue pour être chargée sur un véhicule porte-voitures, les plots mobiles du dispositif décrit dans le document FR 3021604 viennent s'engager dans des orifices ménagés dans les parois latérales dudit véhicule porte-voitures. Or ces parois sont susceptibles de se déformer vers l'extérieur, avec un déplacement pouvant atteindre 20 millimètres. En raison de l'éloignement relatif des parois latérales par rapport aux palettes, il peut donc arriver que les plots mobiles du dispositif qui devraient être engagés dans les orifices des parois latérales se retrouvent désengagés en dehors desdits orifices. Cela entraîne un risque important de déverrouillage accidentel des palettes chargées sur le véhicule porte-voitures.

De plus le système décrit dans le document FR 3021604 ne comprend pas de butée à la rétraction, ce qui augmente le risque de désengagement des plots.

Ce système coopère avec des trous dans les parois, de formats différents. Il y a des trous pour immobiliser en longitudinal et en vertical et des trous oblongs orientés horizontalement pour bloquer le déplacement vertical mais laisser libre le déplacement longitudinal pour éviter les hyperstatismes. Des zones sont ainsi définies sur les parois, ce qui limite les emplacements de palettes.

### Description de l'invention

L'objet de la présente invention vise par conséquent à pallier les inconvénients de l'art antérieur en proposant un nouveau support de charge comportant un dispositif amélioré pour sa fixation de manière amovible sur une structure porteuse à parois verticales ainsi qu'un nouvel ensemble de positionnement, chargement et déchargement d'une charge adapté à ce nouveau support de charge.

Ce nouveau support de charge doit répondre au problème de risque de déverrouillage du support de charge en cas d'éloignement des parois de la structure porteuse sur laquelle le support de charge est destiné à être verrouillé, et le nouvel ensemble de positionnement, chargement et déchargement d'une charge doit permettre de positionner, verrouiller et déverrouiller et sécuriser un support de charge sur une structure porteuse de manière fiable, sécuritaire et durable dans une pluralité de positions de chargement.

Afin d'éviter toute intervention manuelle de la part de l'utilisateur, le nouvel ensemble de positionnement, chargement et déchargement d'une charge doit également de permettre positionner, verrouiller et déverrouiller une palette sur une structure porteuse de manière entièrement automatisée.

Le nouveau système doit aussi permettre le déverrouillage entièrement automatisé

De manière à diminuer la durée des opérations nécessaires lors de la mise en place, du déplacement et/ou du retrait d'un support de charge au sein d'une structure porteuse, nouvel ensemble de positionnement, chargement et déchargement d'une charge doit avantageusement permettre de positionner, verrouiller et déverrouiller un support de charge sur une structure porteuse de manière rapide et avec un nombre d'étapes réduit au minimum.

Les objets assignés à l'invention sont atteints à l'aide d'un support de charge destiné à être fixé de manière amovible sur une structure porteuse à parois verticales pourvues d'une pluralité d'orifices, ledit support de charge comportant deux longerons longitudinaux et un système de verrouillage permettant de fixer le support de charge à la structure porteuse au moyen de pièces mobiles s'engageant dans certains des orifices, ces pièces mobiles étant disposées sur les côtés du support de charge en quatre groupes, à savoir un groupe à l'avant et un groupe à l'arrière de chacun des côtés du support de charge, caractérisé en ce que :
- chaque groupe comprend au moins un crochet transversal pivotant, qui pivote transversalement entre une position escamotée de déverrouillage et une position pivotée de verrouillage en saillie transversale par rapport aux côtés du support de charge, position pivotée de verrouillage dans laquelle ledit crochet transversal pivotant peut s'engager par son extrémité libre dans l'un des orifices de la structure porteuse ;
- les crochets transversaux pivotants des deux groupes avant ou des deux groupes arrière sont également basculants longitudinalement ;
- chacun des crochets transversaux pivotants est individuellement précontraint en position pivotée de verrouillage par des moyens de poussée élastique ;
- chacun des crochets transversaux pivotants comprend un corps principal et un doigt de verrouillage ; et
- le support de charge comporte en outre des organes d'entraînement qui font passer les crochets transversaux pivotants de la position escamotée de déverrouillage à la position pivotée de verrouillage, et vice-versa.

L'usage de pièces mobiles comprenant des crochets transversaux pivotants à extrémité libre se prolongeant vers le bas permet d'empêcher la paroi de la structure porteuse de s'éloigner lorsque le support de charge est fixé de manière amovible sur celle-ci, répondant ainsi au problème de risque de déverrouillage du support de charge en cas d'éloignement des parois de la structure porteuse.

L'usage de crochets transversaux pivotants qui basculent longitudinalement pour au moins l'un des groupes de crochets permet avantageusement de déplacer légèrement le support de charge longitudinalement lorsque ces crochets sont engagés dans des orifices de la structure porteuse, de sortes que des crochets transversaux pivotants appartenant à l'autre groupe de crochet puissent également s'engager à verrouillage dans des orifices de la structure porteuse. Ce léger déplacement est intéressant voire indispensable compte-tenu que l'entraxe des orifices dans la structure porteuse est fixe, et que suivant l'inclinaison du support de charge, l'entraxe des crochets transversaux pivotants doit varier pour coïncider. De plus il y a des tolérances de fabrication et les orifices d'une structure porteuse ne sont pas forcément en face des orifices de l'autre structure porteuse.

L'usage d'orifices dans la structure porteuse permet de réaliser tous les trous au même format. Ceci a pour avantage de faciliter leur fabrication et de réduire leur coût, par exemple par poinçonnage. En outre, la multiplicité des orifices dans la structure porteuse permet toutes les positions pour le support de charge, il n'y a pas de zone dédiée. Cette multiplicité des orifices permet avantageusement un positionnement précis du support de charge en toutes positions dans la structure porteuse.

Les moyens de poussée élastique et la précontrainte individuelle des crochets transversaux pivotants permettent de renforcer la sécurité du verrouillage du support de charge sur les parois de la structure porteuse.

Selon un exemple de réalisation, les groupes qui comprennent les crochets transversaux pivotants basculants longitudinalement ne comprennent qu'un seul crochet transversal pivotant par groupe. En effet, il n'est a priori pas nécessaire d'avoir plusieurs crochets dans le groupe de crochets transversaux pivotants destinés à être engagés en premier à verrouillage dans des orifices de la structure porteuse.

Selon un autre exemple de réalisation, les groupes qui ne comprennent pas de crochets transversaux pivotants basculants longitudinalement comprennent au moins deux, et de préférence uniquement deux, crochets transversaux pivotants transversalement par groupe. Ceci permet d'augmenter les chances qu'un des crochets transversaux pivotants de ce groupe trouve un orifice de la structure porteuse dans lequel s'engager à verrouillage. On obtient ainsi une meilleure précision de positionnement de la charge, donc une meilleure utilisation du volume disponible et une meilleure imbrication des charges au sein de la structure porteuse.

Selon un exemple supplémentaire de réalisation, l'extrémité libre de chaque doigt de verrouillage est conformée en ergot de verrouillage, cet ergot de verrouillage se prolongeant vers le bas lorsque le crochet transversal pivotant est en position pivotée de verrouillage. Cet ergot de verrouillage permet d'empêcher le désengagement accidentel d'un doigt de verrouillage lorsqu'il est engagé à verrouillage dans l'un des orifices de la structure porteuse.

Selon un exemple de réalisation, chaque crochet transversal pivotant comprend une plage d'appui sensiblement plane située en sous-face du doigt de verrouillage entre le corps principal et l'extrémité libre du doigt de verrouillage. Cette plage d'appui permet un jeu latéral entre les parois de la structure porteuse et le support de charge.

Selon un autre exemple de réalisation, les organes d'entraînement sont montés dans les longerons du support de charge et ils comprennent un axe d'entraînement fixé aux crochets transversaux pivotants et une pièce d'actionnement montée sur ledit axe d'entraînement. La présence des organes d'entraînement dans les longerons du support de charge permet non seulement de les protéger, mais cela permet également de ne pas encombrer la surface utile du support de charge. L'axe d'entraînement, permet de faire pivoter les crochets transversaux pivotants en déverrouillage lorsque la pièce d'actionnement est actionnée.

Selon un exemple supplémentaire de réalisation, la pièce d'actionnement comprend une tôle excentrique, une palette ou un levier fixé(e) sur l'axe d'entraînement de manière déportée latéralement par rapport à l'axe longitudinal dudit axe d'entraînement. Ainsi, un appui sur ladite tôle excentrique permet de faire pivoter les crochets transversaux pivotants en déverrouillage.

Selon un exemple de réalisation, le support de charge comprend des moyens de sécurité élastiques ou débrayables qui relient chaque pièce d'actionnement à l'axe d'entraînement sur lequel elle est montée. Ces moyens de sécurité permettent avantageusement aux préhenseurs de saisir un support de charge verrouillé en position de chargement même lorsque les crochets transversaux pivotants sont sous charge.

Les objets assignés à l'invention sont également atteints à l'aide d'un ensemble de positionnement, chargement et déchargement d'un support de charge sur une structure porteuse à parois verticales pourvues d'orifices, ledit ensemble comprenant un support de charge et un manipulateur capable de saisir le support de charge, de le déplacer, de l'orienter et de le déposer dans une position de chargement sur la structure porteuse, ledit manipulateur étant pourvu pour cela de deux préhenseurs comportant chacun des moyens d'accrochage prévus pour s'engager avec le support de charge, caractérisé en ce que le support de charge est conforme à l'une quelconque des revendications précédentes. Cet ensemble de positionnement, chargement et déchargement est avantageusement adapté pour toutes les étapes de manipulation d'un support de charge selon l'invention.

Selon un exemple de réalisation, chaque préhenseur comprend des moyens d'actionnement qui viennent en position de coopération mécanique avec les organes d'entraînement du support de charge pour commander le pivotement des crochets transversaux pivotants en position de déverrouillage. Ainsi, l'ensemble de positionnement, chargement et déchargement, en plus de manipuler d'un support de charge selon l'invention, peut également réaliser les opérations de verrouillage et de déverrouillage du support de charge sur les parois de la structure porteuse est renforcée.

Selon un autre exemple de réalisation, les moyens d'actionnement commandent le pivotement des crochets transversaux pivotants des deux groupes avant, indépendamment du pivotement des crochets transversaux pivotants des deux groupes arrière et vice-versa. Ainsi, l'ensemble de positionnement, chargement et déchargement permet de verrouiller ou déverrouiller un des groupes de crochets transversaux pivotants, avant de faire de-même pour l'autre groupe de crochets. En effet, il y a aussi une indépendance droite gauche. Comme les orifices d'une paroi de la structure porteuse ne sont pas forcément exactement en face de ceux de l'autre paroi, le verrouillage des deux côtés ne se font pas forcément de manière simultanée.

Selon un exemple supplémentaire de réalisation, les moyens d'actionnement des préhenseurs sont confondus avec ou situés sur les moyens d'accrochage des préhenseurs. Ainsi, lors de l'opération de saisie du support de charge par l'ensemble de positionnement, chargement et déchargement, ce dernier peut avantageusement déverrouiller automatiquement les crochets transversaux pivotants, tandis que ces derniers peuvent retourner automatiquement dans leur position de verrouillage lorsque le support de charge est libéré de l'ensemble de positionnement, chargement et déchargement.

Selon un exemple de réalisation, les moyens d'accrochage comprennent des griffes longitudinales pivotantes qui réalisent l'accrochage des préhenseurs au support de charge par une première partie de leur mouvement de pivotement longitudinal, puis arrivent en position de coopération mécanique avec les organes d'entraînement du support de charge par une deuxième partie de leur mouvement de pivotement longitudinal. Ainsi, le pivotement longitudinal des griffes longitudinales pivotantes permet non seulement de saisir ou libérer le support de charge, mais également de faire pivoter les crochets transversaux pivotants dans leur position de verrouillage ou de déverrouillage.

Selon un autre exemple de réalisation, les deux longerons longitudinaux du support de charge sont équipés chacun d'une pièce de reprise pour la préhension dudit support de charge par les moyens d'accrochage des préhenseurs, chaque pièce de reprise comportant une fente longitudinale prolongée par une zone ouverte de plus grandes dimensions que ladite fente. Cette zone ouverte autorise avantageusement un décentrage latéral pour les griffes longitudinales pivotantes lorsqu'elles tentent de pénétrer dans la fente longitudinale de la pièce de reprise pour saisir le support de charge. Bien entendu, ce décentrage éventuel peut être rencontré uniquement pendant la phase d'approche, ensuite les griffes longitudinales pivotantes sont parfaitement centrées avec la pièce de reprise qui leur est associée. La fente longitudinale réalise un centrage des préhenseurs par rapport au support de charge, ce qui permet avantageusement de tolérer des imprécisions de positionnement relatif des préhenseurs par rapport au support de charge.

Selon un exemple supplémentaire de réalisation, l'ensemble de positionnement, chargement et déchargement comporte en outre un dispositif de détection qui vérifie que dans chaque groupe au moins un crochet transversal pivotant est engagé dans un des orifices de la structure porteuse. Ainsi, la sécurité du verrouillage du support de charge sur les parois de la structure porteuse est renforcée.

Selon un exemple de réalisation, le dispositif de détection comprend soit des capteurs d'effort, soit des capteurs magnétiques placés sur les préhenseurs et coopérant avec des aimants placés sur une partie mobile des crochets transversaux pivotants, sur une partie mobile des pièces d'actionnement, ou sur une pièce mobile reliée aux crochets transversaux pivotants ou aux pièces d'actionnement. Ces capteurs sont avantageusement fiables et robustes et permettent d'assurer un verrouillage sécuritaire du support de charge sur les parois de la structure porteuse. Ils permettent de contrôler le verrouillage du support de charge aux parois de la structure porteuse, par exemple avant de libérer le verrouillage des préhenseurs, et de contrôler le bon déverrouillage des crochets transversaux, par exemple avant le déplacement du support de charge.

Les objets assignés à l'invention sont aussi atteints à l'aide d'un procédé de fixation amovible d'un support de charge sur une structure porteuse à parois verticales pourvues d'une pluralité d'orifices au moyen d'un ensemble tel que décrit précédemment et caractérisé en ce que :
- les moyens d'accrochage des préhenseurs s'engagent avec le support de charge pour lier le manipulateur au support de charge ;
- les moyens d'actionnement des préhenseurs commandent le pivotement des crochets transversaux pivotants en position escamotée de déverrouillage ;
- le manipulateur oriente et déplace le support de charge jusqu'en position de chargement sur la structure porteuse ;
- les moyens d'actionnement des préhenseurs commandent le pivotement en position pivotée de verrouillage des crochets transversaux pivotants appartenant aux deux groupes de crochets transversaux pivotants basculants longitudinalement, désignés en tant que premiers groupes ;
- le manipulateur effectue de petits mouvements du support de charge jusqu'à ce que ce qu'au moins un crochet transversal pivotant basculant longitudinalement de chacun des premiers groupes soit engagé dans un orifice de la structure porteuse ;
- le dispositif de détection vérifie qu'au moins un crochet transversal pivotant basculant longitudinalement de chacun des premiers groupes est correctement engagé dans un orifice de la structure porteuse ;
- les moyens d'actionnement des préhenseurs commandent le pivotement en position pivotée de verrouillage des crochets transversaux pivotants appartenant aux deux autres groupes de crochets transversaux pivotants, désignés en tant que deuxièmes groupes ;
- le manipulateur effectue de petits mouvements du support de charge, le support de charge étant accroché à la structure porteuse par des crochets transversaux pivotants des premiers groupes qui basculent longitudinalement pour autoriser des mouvements longitudinaux du support de charge, jusqu'à ce que ce qu'au moins un crochet transversal pivotant de chacun des deuxièmes groupes soit engagé dans un orifice de la structure porteuse ;
- le dispositif de détection vérifie qu'au moins un crochet transversal pivotant de chacun des deuxièmes groupes est correctement engagé dans un orifice de la structure porteuse ;
- les moyens d'accrochage des préhenseurs se désengagent du support de charge et le manipulateur libère le support de charge.

Ce procédé permet avantageusement d'automatiser la fixation amovible d'un support de charge sur une structure porteuse tout en garantissant la sécurité du verrouillage dudit support de charge sur la structure porteuse.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective d'un ensemble de positionnement, chargement et déchargement de l'invention selon un exemple de l'invention, dans laquelle une paire de préhenseur est en approche d'un support de charge immobilisé entre les parois d'une structure porteuse ;
- la figure 2 est une vue partielle en perspective d'un préhenseur selon un exemple de l'invention positionné et verrouillé sur le longeron latéral d'un support de charge de l'invention dont les crochets transversaux pivotants sont en position rétractée de déverrouillage ;
- les figures 3 et 4 sont des vues de détail des parties encerclées sur la figure 2 ;
- la figure 5 est une vue partielle en perspective d'un préhenseur selon un exemple de l'invention positionné, mais non verrouillé, sur le longeron latéral d'un support de charge de l'invention dont les crochets transversaux pivotants sont en position de verrouillage ;
- les figures 6 et 7 sont des vues de détail des parties encerclées sur la figure 5 ;
- la figure 8 est une vue partielle en perspective d'un préhenseur selon un exemple de l'invention positionné et verrouillé sur le longeron latéral d'un support de charge de l'invention dont les crochets transversaux pivotants, en charge, sont en position de verrouillage alors que les organes d'entraînement des crochets transversaux pivotants sont sollicités en déverrouillage, mais débrayés ;
- les figures 9 et 10 sont des vues de détail des parties encerclées sur la figure 8;
- les figures 11 à 15 sont des vues en perspective illustrant la cinématique des griffes longitudinales pivotantes de l'invention pour la saisie d'un support de charge au niveau de ses longerons longitudinaux ;
- la figure 16 est une vue de dessus d'une pièce de reprise de l'invention ;
- les figures 17 à 20 sont des vues de profil illustrant la cinématique des griffes longitudinales pivotantes de l'invention pour la saisie d'un support de charge au niveau de ses longerons longitudinaux et la sollicitation des crochets transversaux pivotants en déverrouillage ;
- la figure 21 est une vue des vue de profil illustrant une situation dans laquelle les crochets transversaux pivotants sont sollicités en déverrouillage alors qu'ils sont « coincés » en position verrouillée ;
- la figure 22 est une vue de profil illustrant un crochet transversal pivotant engagé à verrouillage dans un orifice ménagé dans la structure porteuse, ledit crochet étant basculé longitudinalement ;
- la figure 23 est une vue de profil illustrant une paire de crochets transversaux pivotants dont l'un des crochets est engagé à verrouillage dans un orifice ménagé dans la structure porteuse tandis que l'autre crochet est en appui sur la languette de tôle présente entre deux orifices ;
- la figure 24 est une vue en coupe selon l'axe de coupe XXIV- XXIV de la figure 23 ;
- la figure 25 est une vue en coupe selon l'axe de coupe XXV- XXV de la figure 23 ;
- la figure 26 est une vue partielle en perspective d'un crochet transversal pivotant relié à une pièce d'actionnement, ledit crochet étant en position pivotée de verrouillage ;
- la figure 27 est une vue similaire à celle de la figure 26, dans laquelle les organes d'entraînement du crochet transversal pivotant comportent des moyens débrayables sollicités en déverrouillage, mais débrayés ; et
- la figure 28 est une vue similaire à celle de la figure 26, dans laquelle les organes d'entraînement du crochet transversal pivotant comportent des moyens élastiques non-sollicités en déverrouillage.

### Mode(s) de réalisation de l'invention

Les éléments structurellement et fonctionnellement identiques présents sur plusieurs figures distinctes, sont affectés d'une même référence numérique ou alphanumérique.

L'invention se rapport à un support de charge (2) destiné à être fixé de manière amovible sur une structure porteuse (3) à parois verticales (7) délimitant un espace de chargement, ainsi qu'à un ensemble (1) prévu pour effectuer le positionnement, le verrouillage et le déverrouillage d'un support de charge (2) amovible selon l'invention sur une structure porteuse (3).

Les parois verticales (7) sont pourvues d'une pluralité d'orifices (13), préférentiellement identiques et rapprochés pour offrir un maximum de positions d'accrochage. Ces orifices (13) présentent par exemple un diamètre de 32 mm, et leur centre sont distant de 45 mm, ce qui implique une distance de 13 mm entre deux orifices (13) adjacents.

Par pièce se prolongeant de manière longitudinale ou par axe longitudinal on entendra ici respectivement une pièce ou un axe se prolongeant selon l'axe horizontal longitudinal général d'un support de charge (2) ou de la structure porteuse (3).

Par pièce se prolongeant de manière transversale ou par axe transversal on entendra ici respectivement une pièce ou un axe se prolongeant selon un axe horizontal qui est transversal à l'axe horizontal longitudinal général d'un support de charge (2) ou de la structure porteuse (3).

Tel qu'illustré sur les figures, le support de charge (2) est préférentiellement sous la forme d'un dispositif désigné par d'autres déposants en tant que « palette » et prévu pour le transport de véhicules sur des portes-voitures. Ce support de charge (2) est amovible car il peut être déposé au sol ou sur une surface de référence pour être chargé avant d'être déplacé et positionné dans une structure porteuse (3). A ce titre, le support de charge (2) de l'invention doit bien être distingué des plateaux des véhicules porte-voitures, qui ne sont pas amovibles et non prévus pour pouvoir être déposés au sol. Le support de charge (2) peut concerner tout support de charge, par exemple pour fret.

Le support de charge (2) de l'invention comporte au moins deux longerons (4) longitudinaux, préférentiellement latéraux, de préférence équipés chacun de deux pièces de reprise (5) pour la préhension du support de charge (2). Chaque pièce de reprise (5) est destinée à servir de pièce de préhension pour un préhenseur (6) de l'ensemble (1) de positionnement, chargement et déchargement qui se centre, prend, déplace, positionne et libère le support de charge (2), et qui peut en outre provoquer préférentiellement le verrouillage et l'immobilisation, ainsi que le déverrouillage et la libération du support de charge (2) au sein d'une structure porteuse (3). Le support de charge (2) de l'invention peut également être saisi et manipulé par l'ensemble (1) de positionnement, chargement et déchargement de manière différente, par exemple en étant saisi directement par ses longerons (4) ou par une autre pièce adaptée.

La structure porteuse (3) délimite une zone de chargement dans laquelle des supports de charge (2) sont destinés à être positionnés pour le chargement et le transport de charges, par exemple de fret, disposées sur les supports de charge (2). La structure porteuse (3) comprend habituellement au moins deux parois verticales (7) parallèles entre lesquelles les supports de charge (2) sont positionnés et immobilisés. A titre d'exemple, la structure porteuse (3) peut être un espace stockage de type entrepôt, un véhicule routier du genre fourgon, remorque, semi-remorque, convoi articulé, un conteneur destiné à être chargé sur une semi-remorque, sur un porte-conteneur, sur un wagon, sur un avion, un véhicule ferroviaire notamment du type porte-voitures, ou équiper des équipements de stockage dans des dépôts ou usines par exemple. Les charges transportées sur les supports de charge (2) sont préférentiellement des véhicules routiers, par exemple des voitures.

L'ensemble (1) selon l'invention comprend un manipulateur (8) équipé d'au moins deux préhenseurs (6), ce manipulateur (8) étant prévu pour se déplacer le long de la structure porteuse (3). Le manipulateur (8) peut être monté sur la structure porteuse (3) ou être indépendant. Il s'agit préférentiellement d'un dispositif comportant un ou plusieurs bras robotisés (9) portant les préhenseurs (6). Chacun des préhenseurs (6) est prévu pour venir saisir le support de charge (2), par exemple au niveau d'une pièce de reprise (5) sur ses longerons (4) longitudinaux. Dans ce but, les préhenseurs (6) comportent chacun des moyens d'accrochage (10) pour saisir le support de charge (2), de préférence au niveau de ses longerons (4), et pour permettre au manipulateur (8) de déplacer, orienter et déposer le support de charge (2) dans une position de chargement définie sur les parois verticales (7) de la structure porteuse (3).

Le support de charge (2) selon l'invention comprend préférentiellement un dispositif d'activation (11) pour activer et désactiver le verrouillage et l'immobilisation, ainsi que le déverrouillage et la libération dudit support de charge (2) au sein d'une structure porteuse (3). Ce dispositif d'activation (11) comprend des pièces mobiles (12), préférentiellement prévues dans les longerons (4) du support de charge (2) pour s'engager dans des orifices (13) ménagés dans les parois verticales (7) de la structure porteuse (3), et des organes d'entraînement (14) montés dans les longerons (4) du support de charge (2) pour déplacer les pièces mobiles (12) entre une position escamotée correspondant au déverrouillage et une position en saillie latérale correspondant au verrouillage.

Chaque préhenseur (6) de l'ensemble (1) selon l'invention comprend préférentiellement des moyens d'actionnement (42) qui viennent en position de coopération mécanique avec les organes d'entraînement (14) du support de charge (2) pour commander le pivotement des crochets transversaux pivotants (15, 16a, 16b). Ces moyens d'actionnement (42) commandent le pivotement des crochets transversaux pivotants (15) situés dans la partie avant du support de charge (2), indépendamment du pivotement des crochets transversaux pivotants (16a, 16b) situés dans la partie arrière du support de charge (2) et vice-versa.

Les moyens d'actionnement (42) des préhenseurs (6) sont préférentiellement confondus avec ou situés sur les moyens d'accrochage (10) des préhenseurs.

Les moyens d'accrochage (10) comprennent préférentiellement des griffes longitudinales pivotantes (25) qui réalisent l'accrochage des préhenseurs au support de charge (2) par une première partie de leur mouvement de pivotement longitudinal, puis arrivent en position de coopération mécanique avec les organes d'entraînement (14) du support de charge (2) par une deuxième partie de leur mouvement de pivotement longitudinal. Les angles de pivotement des griffes longitudinales pivotantes (25) sont préférentiellement contrôlés par un capteur (22) de manière à renseigner le manipulateur (8) de leur position exacte. Ce capteur (22) de rotation ou de position permet avantageusement de contrôler le bon verrouillage des préhenseurs au support de charge avant son déplacement.

Selon l'invention, les pièces mobiles (12) sont des crochets transversaux pivotants (15, 16a, 16b) qui sont pivotés autour d'un axe d'entraînement (17) longitudinal entre leur position escamotée et leur position en saillie latérale par les organes d'entraînement (14).

De manière générale, dans le groupe de crochets transversaux pivotants (15) ne comportant qu'un seul crochet, ces crochets transversaux pivotants (15) sont fixés sur l'axe d'entraînement (17) longitudinal de manière classique.

Selon un mode de réalisation préféré de l'invention, cette fixation est différente pour le groupe de crochets transversaux pivotants (16a, 16b) comportant plusieurs crochets. Dans leur partie prévue pour leur fixation sur l'axe d'entraînement (17) longitudinal, les crochets transversaux pivotants (16a, 16b) comprennent une partie d'extrémité ouverte conformée en pince, à la manière d'une clef plate ou d'une fourchette à deux dents (44a, 44b), ces deux dents (44a, 44b) venant s'engager en ajustement serré sur l'axe d'entraînement (17) longitudinal au niveau d'une partie réceptrice (45) dudit axe d'entraînement (17) qui présente une section en coupe en forme de parallélogramme losange. Ainsi, alors que l'axe d'entraînement (17) est de section ronde ailleurs, il est de section en forme de parallélogramme losange au niveau des crochets transversaux pivotants (16a, 16b).

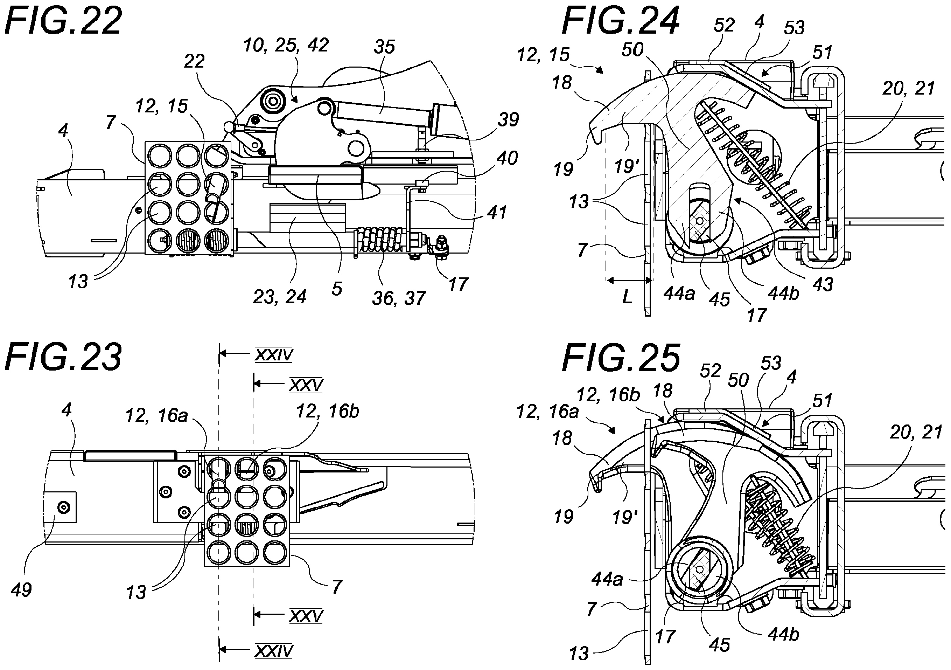

Cette forme spécifique de la partie réceptrice (45) sur laquelle sont montés les crochets transversaux pivotants (16a, 16b) permet la rotation en verrouillage d'un des crochets autour de la partie réceptrice (45) alors que le ou les autres crochets restent en position de déverrouillage, et vice-versa. On notera ainsi que sur les figures 24 et 25, l'axe d'entraînement (17) longitudinal est dans la même position et n'a pas bougé. Ce basculement pivotement d'un crochet transversal pivotant (16a, 16b) autour de la partie réceptrice (45) dans pivotement de l'axe est permis grâce au faible écart angulaire existant entre la position de verrouillage et de déverrouillage des crochets transversaux pivotants (15, 16a, 16b) et grâce à la parie angulaire séparant les deux flancs d'appui du parallélogramme losange et autour de laquelle s'effectue le basculement.

Afin d'éviter que les crochets transversaux pivotants (15, 16a, 16b) ne se soulèvent vers le haut et ne puissent quitter l'axe d'entraînement (17) longitudinal, une pièce de retenue (51), par exemple sous la forme d'une tôle épaisse, est prévue au-dessus de chacun des crochets transversaux pivotants (15, 16a, 16b), notamment au-dessus des crochets transversaux pivotants (16a, 16b) présentent une partie d'extrémité ouverte au niveau de leur base de fixation.

Cette pièce de retenue (51) est préférentiellement en contact d'appui sur les crochets transversaux pivotants (15, 16a, 16b). Elle présente préférentiellement une partie supérieure (52) sensiblement horizontale prévue pour empêcher le déplacement vertical des crochets transversaux pivotants (15, 16a, 16b) vers le haut, et une partie latérale (53) inclinée qui tend à pousser les crochets transversaux pivotants (15, 16a, 16b) à basculer en position de verrouillage grâce à sa pente. Cette pièce de retenue est conformée de manière à collaborer avec la partie supérieure de chacun des crochets transversaux pivotants (15, 16a, 16b). De fait, la partie supérieure de chacun des crochets transversaux pivotants (15, 16a, 16b), c'est-à-dire la partie opposée à leur base de fixation, présente préférentiellement un profil arrondi en quart de cercle.

Chacun des crochets transversaux pivotants (15, 16a, 16b) comporte préférentiellement un doigt de verrouillage (18) prévu pour s'engager à verrouillage dans des orifices (13) ménagés dans les parois verticales (7) de la structure porteuse (3) lorsqu'il est pivoté dans sa position en saillie latérale. Chaque doigt de verrouillage (18) présente préférentiellement une longueur comprise entre 1 cm et 10 cm, par exemple une longueur d'environ 4 cm. Lorsqu'un doigt de verrouillage (18) est engagé à verrouillage dans un des orifices (13) ménagés dans les parois verticales (7) de la structure porteuse (3), il pénètre dans ledit logement ou orifice (13), ce qui permet notamment de porter le support de charge (2).

Les orifices (13) ménagés dans la structure porteuse (3) sont de préférence circulaires et les doigts de verrouillage (18) présentent une section légèrement inférieure au diamètre des orifices (13) circulaires. Les dimensions des doigts de verrouillage (18) et des orifices (13) circulaires sont cependant prévues de sorte que deux doigts de verrouillage (18) adjacents ne peuvent pas s'engager dans un même orifice (13). La structure porteuse (3) comprend préférentiellement un très grand nombre d'orifices (13), ce qui autorise un nombre extrêmement grand de positions de fixation possibles pour chaque support de charge (2).

Afin de mieux sécuriser le support de charge (2) dans la structure porteuse (3) et d'éviter l'éloignement latéral vers l'extérieur des parois verticales (7) de ladite structure porteuse (3) chaque doigt de verrouillage (18) peut également présenter une extrémité libre conformée en ergot de verrouillage (19) faisant saillie vers le bas au niveau de son extrémité libre lorsque le crochet transversal pivotant (15, 16a, 16b) est en position pivotée de verrouillage. Cet ergot de verrouillage (19) permet à la fois de verrouiller le support de charge (2) dans la structure porteuse (3) et d'éviter l'éloignement latéral vers l'extérieur de la paroi (7) de la structure porteuse (3) où le doigt de verrouillage (18) est engagé, cette paroi (7) étant alors retenue par l'extrémité libre du doigt de verrouillage (18) conformée en ergot de verrouillage (19).

L'ergot de verrouillage (19) est relié au reste du corps du doigt de verrouillage (18) par une partie intermédiaire, dont la sous-face est conformée en plage d'appui (19') sensiblement plane. Cette plage d'appui (19') située en sous-face du doigt de verrouillage (18) entre le corps principal (50) et l'extrémité libre de chaque crochet transversal pivotant (15, 16a, 16b) permet de créer une zone d'appui pour ledit crochet transversal pivotant (15, 16a, 16b) lorsqu'il est engagé dans un des orifices (13) de la structure porteuse (3), cette zone d'appui se prolongeant en direction de ladite structure porteuse (3) pour permettre un jeu latéral de verrouillage de chaque doigt de verrouillage (18) en rapprochement ou en éloignement des parois verticales (7) de la structure porteuse (3). Cette plage d'appui (19') présente par exemple une longueur (L) comprise entre 0,5 et 5 centimètres, préférentiellement comprise entre 1 et 3 centimètres, plus préférentiellement d'environ 2 centimètres.

Préférentiellement, un jeu est également prévu entre le support de charge (2) et les parois verticales (7) de la structure porteuse (3). Ce jeu fonctionnel est de préférence minimal, par exemple de l'ordre de 1 à 10 mm, préférentiellement de l'ordre de 5 mm car les parois sont habituellement relativement souples latéralement. Le but de ce jeu fonctionnel est d'absorber les tolérances de planéité de la tôle et de fabrication des supports de charge (2) et de la structure porteuse (3).

Selon l'invention, les organes d'entraînement (14) des crochets transversaux pivotants (15, 16a, 16b) comprennent un axe d'entraînement (17) relié auxdits crochets transversaux pivotants (15, 16a, 16b) de sorte que lorsque l'axe d'entraînement (17) pivote autour de son axe longitudinal, les crochets transversaux pivotants (15, 16a, 16b) sont également entraînés à pivotement, ce qui permet de les déplacer entre leur position en saillie latérale correspondant au verrouillage et leur position escamotée correspondant au déverrouillage.

Chaque support de charge (2) est ainsi équipé d'un axe d'entraînement (17) dans chacun de ses longerons (4) longitudinaux, chaque axe d'entraînement (17) étant préférentiellement logé dans la longueur d'un longeron (4) de sorte que les organes d'entraînement (14) des crochets transversaux pivotants (15, 16a, 16b) soient non-seulement protégés des intempéries dans les longerons (4), mais qu'en outre ils ne représentent aucun encombrement en dehors du support de charge (2).

Pour les mêmes raisons d'encombrement il est d'ailleurs à noter qu'en position escamotée, les crochets transversaux pivotants (15, 16a, 16b) ne font préférentiellement pas saillie en dehors des longerons (4) où ils sont logés.

En effet, le support de charge (2) selon l'invention est préférentiellement prévu de sorte que les mécanismes permettant son verrouillage et son déverrouillage ne modifient pas sa forme externe, notamment de sorte que les espaces libres dudit support de charge (2) ne soient pas obstrués, ce qui est très important par exemple lorsque de tels supports de charge (2) sont utilisés pour transporter des véhicules imbriqués et très proches les uns au-dessus des autres.

Le fait qu'en position escamotée, les crochets transversaux pivotants (15, 16a, 16b) ne font pas saillie en dehors des longerons (4) où ils sont logés permet avantageusement de pouvoir empiler les supports de charge (2) les un au-dessus des autres.

Notamment pour des raisons évidentes de sécurité, les organes d'entraînement (14) comprennent des moyens de poussée élastique (20) qui font pivoter automatiquement les crochets transversaux pivotants (15, 16a, 16b) dans leur position en saillie latérale lorsqu'ils ne sont pas déplacés en position escamotée. En effet, la position de verrouillage est la position de sécurité.

Ces moyens de poussée élastique (20) peuvent comporter un ressort précontraint (21) qui équipe chaque crochet transversal pivotant (15, 16a, 16b) pour le pousser en direction de sa position de verrouillage.

Les organes d'entraînement (14) sont reliés à une pièce d'actionnement (23) mobile logée dans chacun des longerons (4) du support de charge (2) de sorte que lorsqu'une pièce d'actionnement (23) est sollicitée elle actionne les organes d'entraînement (14) pour que ceux-ci fassent pivoter les crochets transversaux pivotants (15, 16a, 16b).

Selon un mode de réalisation préféré de l'invention, chaque axe d'entraînement (17) est entraîné à rotation par une pièce d'actionnement (23) mobile, de montée à libre rotation ou fixée sur ledit axe d'entraînement (17).

Cette pièce d'actionnement (23) comprend par exemple une tôle excentrique (24), une palette ou un levier prévu(e) déporté(e) latéralement sur l'axe d'entraînement (17), de sorte que lorsque la pièce d'actionnement (23) mobile est actionnée, elle tend à faire pivoter l'axe d'entraînement (17) autour de son axe longitudinal afin de faire pivoter en déverrouillage les crochets transversaux pivotants (15, 16a, 16b) reliés à celui-ci.

Selon un mode de réalisation préféré de l'invention des moyens de sécurité (46) élastiques ou débrayables pour relier pièce d'actionnement (23) à l'axe d'entraînement (17) peuvent être prévus. Ils seront décrits plus loin.

La façon dont la pièce d'actionnement (23) mobile est actionnée est décrite ci-après.

Selon l'invention, chaque préhenseur (6) comprend deux griffes longitudinales pivotantes (25), qui pivotent autour d'un axe transversal (26) entre une position de préhension du support de charge (2) et une position de libération du support de charge (2). En position de préhension du support de charge (2), une griffe longitudinale pivotante (25) est verrouillée avec une pièce de reprise (5) du support de charge (2), tandis qu'en position de libération du support de charge (2), la griffe longitudinale pivotante (25) n'est plus en prise avec une pièce de reprise (5) du support de charge (2).

Les deux griffes longitudinales pivotantes (25) d'un même préhenseur (6) sont préférentiellement identiques et prévues en miroir, chacune à une extrémité opposée en sous-face du préhenseur (6).

Chacune des griffes longitudinales pivotantes (25) comporte un axe transversal (26) de pivotement et un doigt de verrouillage (27) prévu pour s'engager à verrouillage dans une fente (28) longitudinale ménagée dans les pièces de reprise (5).

Chacune de ces fentes (28) longitudinales présente préférentiellement une entrée évasée (29), des rebords chanfreinés (30) et une zone ouverte (31) prolongeant l'entrée évasée afin de faciliter la pénétration du doigt de verrouillage (27) des griffes longitudinales pivotantes (25) dans les pièces de reprise (5) et de centrer le préhenseur (6) sur le support de charge (2). La zone ouverte (31) forme un grand espace libre destiné à recevoir les doigts de verrouillage (27) dans une fente (28) longitudinale même ceux-ci ne sont pas parfaitement centrés avec ladite fente (28), de sorte que l'entrée évasée (29) sert à guider et à centrer la pénétration du doigt de verrouillage (27) des griffes longitudinales pivotantes (25) au fond de la fente (28).

Les flancs latéraux (32) des doigts de verrouillage (27) peuvent également être légèrement amincis au niveau de leur extrémité libre afin d'autoriser un jeu latéral de quelques centimètres, par exemple d'environ +/- 3 centimètres, pour les griffes longitudinales pivotantes (25) lorsqu'ils s'engagent avec une pièce de reprise (5)

Chacun des griffes longitudinales pivotantes (25) présente préférentiellement une gorge de verrouillage (33) située entre l'axe transversal (26) de pivotement desdits crochets (25) et leur doigt de verrouillage (27) respectif. En position de préhension du support de charge (2), le doigt de verrouillage (27) pénètre dans la fente (28) ménagée dans la pièce de reprise (5) et la gorge de verrouillage (33) vient engager l'extrémité de ladite fente (28) ménagée opposée à la zone ouverte (31). Dans ce but, la hauteur de la gorge de verrouillage (33) est supérieure à l'épaisseur de la pièce de reprise (5), au moins au niveau de la fente (28) de celle-ci. La profondeur de la gorge de verrouillage (33) est de l'ordre quelques centimètres, par exemple d'environ 3 centimètres, de sorte que la pièce de reprise (5) puisse être suffisamment engagée dans la gorge de verrouillage (33) lorsqu'une griffe longitudinale pivotante (25) est en position de préhension, pour que le support de charge (2) puisse être soulevé de manière fiable et sûre par ladite griffe longitudinale pivotante (25).

Lorsque les griffes longitudinales pivotantes (25) sont en position de préhension, leur doigt de verrouillage (27) se trouve préférentiellement à proximité immédiate d'une pièce d'actionnement (23) mobile.

Lorsqu'elles sont en position de préhension, les griffes longitudinales pivotantes (25) peuvent être pivotées plus avant vers une position d'actionnement où ils sont toujours verrouillés avec une pièce de reprise (5). Dans cette position d'actionnement, les griffes longitudinales pivotantes (25) arrivent en contact avec la pièce d'actionnement (23) mobile et actionnent ladite pièce d'actionnement (23), de sorte que celle-ci actionne à son tour des organes d'entraînement (14) faisant pivoter les crochets transversaux pivotants (15, 16a, 16b) dans leur position escamotée. Dans cette position, il n'y a préférentiellement plus de jeu entre les préhenseurs (6) et le support de charge (2), ce qui permet au manipulateur (8) de bien connaitre la position du support de charge (2) pour le placer correctement.

Ainsi, lorsque les griffes longitudinales pivotantes (25) saisissent un support de charge (2) au niveau de ses longerons (4) longitudinaux et que les griffes longitudinales pivotantes (25) sont pivotées en position d'actionnement, le support de charge (2) est déverrouillé de la structure porteuse (3) et peut être déplacée par le manipulateur (8).

Afin que les griffes longitudinales pivotantes (25) actionnent la pièce d'actionnement (23) qui leur est associée, chaque griffe longitudinale pivotante (25) présente une partie bombée (34) en relief située à la suite du doigt de verrouillage (27). Cette partie bombée (34) en relief se prolonge sensiblement à l'opposé de l'axe transversal (26) de pivotement de chaque griffe longitudinale pivotante (25) pour venir en contact d'appui sur la pièce d'actionnement (23) lorsque ladite griffe longitudinale pivotante (25) est pivotée de manière supplémentaire après avoir engagé la pièce de reprise (5).

On notera que lorsqu'une griffe longitudinale pivotante (25) est en position de position de libération, elle n'est plus en contact avec une pièce d'actionnement (23) et cette dernière libère les organes d'entraînement (14) de sorte que les crochets transversaux pivotants (15, 16a, 16b) sont pivotés dans leur position en saillie latérale.

Le pivotement des griffes longitudinales pivotantes (25) est de préférence effectué par un actionneur (35), de préférence un vérin, logé dans chacun des préhenseurs (6). Chaque actionneur (35) est de préférence positionné horizontal dans un préhenseur (6), la course nulle de chaque actionneur (35) correspondant pour les griffes longitudinales pivotantes (25) à la position de libération du support de charge (2). Un capteur (22) de position ou de rotation est également préférentiellement prévu pour indiquer la position angulaire des griffes longitudinales pivotantes (25).

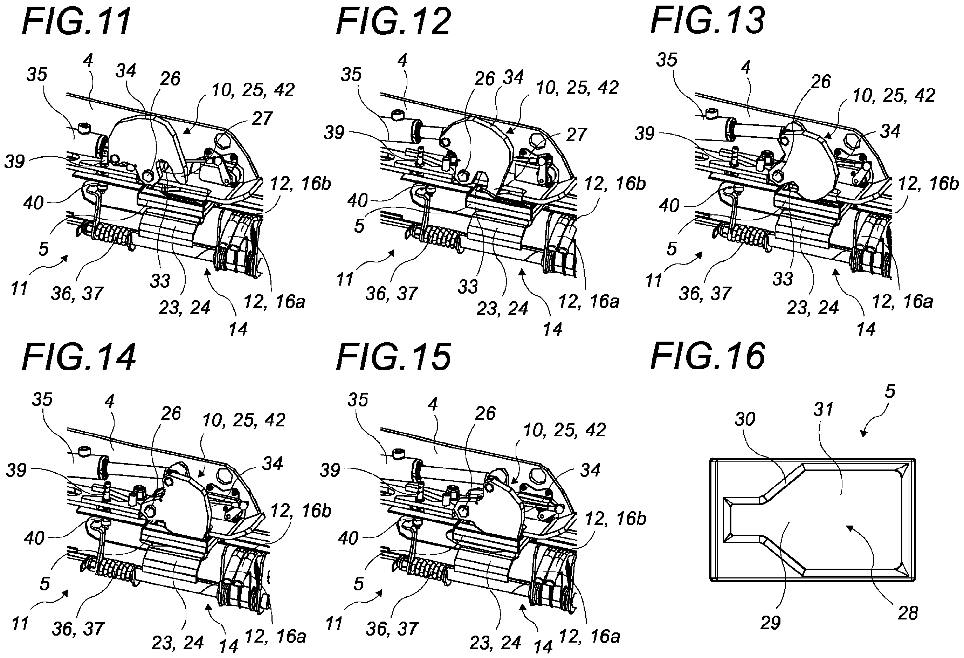

Un exemple de cinématique de l'actionneur (35) et des griffes longitudinales pivotantes (25) est illustré sur les figures 11 à 15 et 17 à 20 pour la saisie d'un support de charge (2) au niveau de ses longerons (4) longitudinaux.

Sur la figure 11, les griffes longitudinales pivotantes (25) sont en position de libération du support de charge (2), correspondant à une course nulle de l'actionneur (35). Les griffes longitudinales pivotantes (25) ont été positionnées au-dessus des pièces de reprise (5) par le manipulateur (8).

Sur la figure 12, les griffes longitudinales pivotantes (25) sont pivotées de ±20°, correspondant à une course d'environ 16 mm de l'actionneur (35). Leur doigt de verrouillage (27) pénètre dans la zone ouverte (31) prolongeant chaque fente (28) ménagée dans les pièces de reprise (5). Dans cette position, les doigts de verrouillage (27) peuvent venir en butée au niveau de l'extrémité fermée de la zone ouverte (31) prolongeant chaque fente (28). Ce contact peut être détecté par un capteur (22) adapté afin d'informer le manipulateur (8) de la position relative du doigt de verrouillage (27) concerné par rapport à la fente (28) ménagée dans la pièce de reprise (5). Dans cette position, les doigts de verrouillage (27) pénètrent dans la fente (28) pour effectuer un pré-centrage du manipulateur (8) par rapport au support de charge (2).

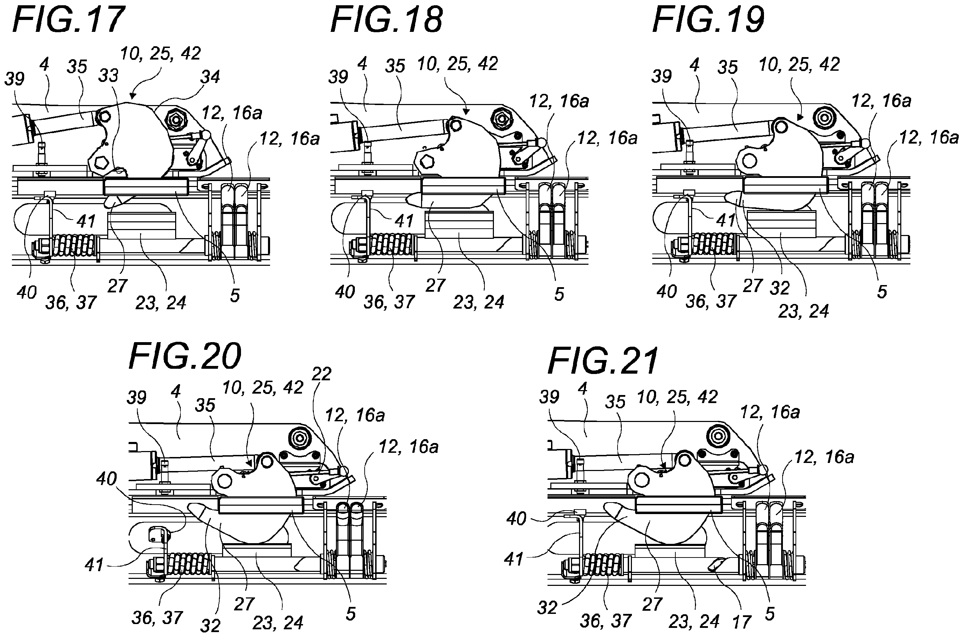

Sur les figures 13 et 17, les griffes longitudinales pivotantes (25) sont pivotées de ±60°, correspondant à une course d'environ 67 mm de l'actionneur (35). Dans cette position, les doigts de verrouillage (27) s'engagent sous chaque fente (28) et la pièce de reprise (5) est engagée dans la gorge de verrouillage (33) de chacun des griffes longitudinales pivotantes (25). La gorge de verrouillage (33) des griffes longitudinales pivotantes (25) s'engage dans la partie étroite de pièces de reprise (5), ce qui permet de récupérer les jeux fonctionnels latéraux et longitudinaux.

Sur la figure 14, les griffes longitudinales pivotantes (25) sont pivotées de ±80°, correspondant à une course d'environ 95 mm de l'actionneur (35). Dans cette position, les doigts de verrouillage (27) sont entièrement engagés sous chaque fente (28).

Sur les figures 15 et 18, les griffes longitudinales pivotantes (25) sont pivotées de ±100°, correspondant à une course d'environ 120 mm de l'actionneur (35). Dans cette position, chaque pièce de reprise (5) arrive à proximité immédiate ou en butée engagée dans la gorge de verrouillage (33) de chacune des griffes longitudinales pivotantes (25). Chaque griffe longitudinale pivotante (25) est à proximité immédiate d'une pièce d'actionnement (23) mobile. Dans cette position, les griffes longitudinales pivotantes (25) sont en position de préhension. Le support de charge (2) est centré et maintenu par les préhenseurs (6), et ses crochets transversaux pivotants (15, 16a, 16b) sont toujours en position en saillie latérale de verrouillage.

Les actionneurs (35) continuent alors leur course pour faire pivoter les griffes longitudinales pivotantes (25) plus avant.

Sur la figure 19, les griffes longitudinales pivotantes (25) sont pivotées de ±108°, correspondant à une course d'environ 129 mm de l'actionneur (35). Dans cette position, les doigts de verrouillage (27) sont toujours engagés sous chaque fente (28) et la pièce de reprise (5) est toujours à proximité immédiate ou en butée engagée dans la gorge de verrouillage (33) de chacun des griffes longitudinales pivotantes. Par sa partie bombée (34) en relief, chaque griffe longitudinale pivotante (25) arrive en contact d'une pièce d'actionnement (23) mobile.

Sur la figure 20, les griffes longitudinales pivotantes (25) sont pivotées de ±135°, correspondant à une course d'environ 150 mm de l'actionneur (35). Dans cette position, les doigts de verrouillage (27) sont toujours engagés sous chaque fente (28) et la pièce de reprise (5) est toujours à proximité immédiate ou en butée engagée dans la gorge de verrouillage (33) de chacun des griffes longitudinales pivotantes. Les griffes longitudinales pivotantes (25) sont en position d'actionnement. Par sa partie bombée (34) en relief, chaque griffe longitudinale pivotante (25) fait pivoter la pièce d'actionnement (23) mobile qui, sur ces figures, est sous la forme d'une tôle excentrique (24). Par son pivotement, la pièce d'actionnement (23) mobile fait pivoter les crochets transversaux pivotants (15, 16a, 16b) dans leur position escamotée. Dans le cas préféré où chaque pièce d'actionnement (23) mobile comprend une tôle excentrique (24), une palette ou un levier fixé(e) déporté(e) latéralement sur l'axe d'entraînement (17) des crochets transversaux pivotants (15, 16a, 16b), la pièce d'actionnement (23) est alors pivotée vers le bas.

Dans cette position d'actionnement des griffes longitudinales pivotantes (25), le support de charge (2) est toujours centré et maintenu par les préhenseurs (6) transversaux, mais il n'est plus verrouillé sur les parois verticales (7) de la structure porteuse (3) par ses crochets transversaux pivotants (15, 16a, 16b). Le manipulateur (8) peut donc déplacer le support de charge (2) pour le déplacer ou l'orienter.

Avantageusement, un dispositif de détection (voir plus loin) contrôle le bon verrouillage des préhenseurs (6) au support de charge (2). Ce dispositif de détection permet de vérifier que les crochets transversaux pivotants (15, 16a, 16b) sont en position escamotée de déverrouillage et que les griffes longitudinales pivotantes (25) sont en position de préhension pour manipuler les supports de charge (2).

Les opérations inverses permettent la mise en place d'un support de charge (2) et son verrouillage sur les parois verticales (7) de la structure porteuse (3), ou la dépose d'un support de charge (2) au sol pour le chargement d'un véhicule. Le pivotement des crochets transversaux pivotants (15, 16a, 16b) dans leur position en saillie latérale est effectué par les moyens de poussée élastique (20) évoqués précédemment.

Selon un mode de réalisation préféré de l'invention, les longerons (4) longitudinaux d'un support de charge (2) comprennent chacun un crochet transversal pivotant (15) au niveau d'une première extrémité des longerons (4), de préférence au niveau de l'extrémité avant longerons (4) et deux crochets transversaux pivotants (16a, 16b) au niveau de l'autre extrémité des longerons (4), de préférence au niveau de l'extrémité arrière des longerons (4). Le fait de mettre deux crochets transversaux pivotants (16a, 16b) au niveau de l'autre extrémité des longerons (4), permet d'améliorer la précision de verrouillage. Par extrémité avant ou arrière on entend l'extrémité des longerons (4) qui sont respectivement orientés vers l'avant ou vers l'arrière de la structure porteuse (3) dans laquelle le support de charge (2) est prévu pour être positionné, l'avant étant donné dans le cas où la structure porteuse (3) fait partie d'un véhicule par le sens de déplacement normal dudit véhicule.

Selon un mode de réalisation préféré de l'invention, le crochet transversal pivotant (15) prévu dans chacun des longerons (4) du support de charge (2), au niveau d'une première extrémité de celui-ci, est prévu basculant longitudinalement, c'est-à-dire basculant autour d'un axe horizontal qui est transversal à l'axe longitudinal des longerons (4) du support de charge (2). On dit que le crochet transversal pivotant (15) est également «oscillant ». De ce fait il verrouille les déplacements verticaux du support de charge (2) par rapport à la structure porteuse (3), mais pas les déplacements longitudinaux. Le verrouillage latéral est préférentiellement assuré par appui du support de charge (2) sur les parois verticales (7) au niveau de patins de frottement (49) prévus sur le flanc des longerons longitudinaux (4) pour venir frotter sur les parois verticales (7) et compenser leur souplesse latérale.

Les deux crochets transversaux pivotants (16a, 16b) prévus au niveau de l'autre extrémité des longerons (4) ne sont pas basculants longitudinalement et sont alors désignés en tant que crochets transversaux pivotants (16a, 16b) fixes. Ainsi, lorsque le doigt de verrouillage (18) de chacun des crochets transversaux pivotants basculants (15) a été introduit dans un des orifices (13) préférentiellement circulaires de la structure porteuse (3), leur caractère basculant autorise un léger jeu de déplacement longitudinal pour le support de charge (2) permettant à l'un des crochets de chaque paires de crochets transversaux pivotants fixes (16a, 16b) de se trouver en face d'un des orifices (13) de la structure porteuse (3) pour l'introduction de son doigt de verrouillage (18). Ainsi, les crochets transversaux pivotants (16a, 16b) verrouillent également le déplacement longitudinal du support de charge (2) par rapport à la structure porteuse (3), ce sont eux qui reprennent par exemple les efforts de freinage dans le cas d'une structure porteuse (3) routière.

Pour une meilleure compréhension de l'invention et de ses avantages, le procédé de mise en place d'un support de charge (2) depuis une première position quelconque vers une seconde position où elle est positionnée et verrouillée sur une structure porteuse (3) est décrit ci-après.

Initialement, le support de charge (2) peut par exemple être positionné et verrouillé sur les parois verticales (7) de la structure porteuse (3), posée dans un espace de stockage prévu dans la structure porteuse (3) où ailleurs, ou être posée au sol.

Initialement, les moyens d'accrochage (10) des préhenseurs (6) sont préférentiellement escamotés pour permettre le déplacement du manipulateur (8) dans un encombrement réduit. Ces moyens d'accrochage (10) peuvent être cependant être sortis partiellement pour permettre le centrage du manipulateur (8) dans le support de charge (2) au cours de la phase d'approche.

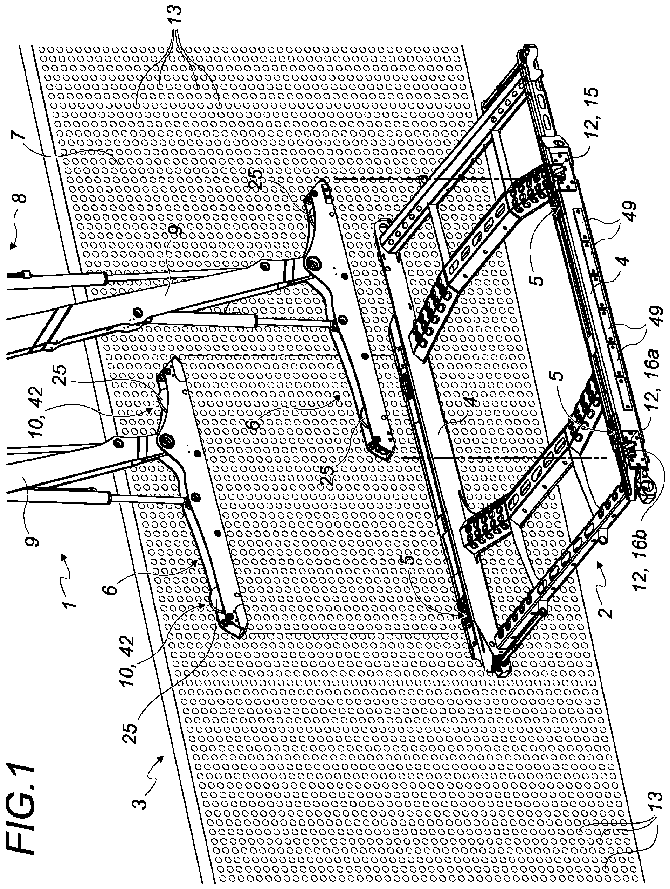

Durant ladite phase d'approche (voir figure 1), le manipulateur (8) vient se positionner au-dessus du support de charge (2), les griffes longitudinales pivotantes (25) de ses préhenseurs (6) étant en position de libération du support de charge (2).

Lors d'une phase de centrage, les préhenseurs (6) viennent se centrer par rapport au support de charge (2) en faisant pivoter en sortie les doigts de verrouillage (27) des griffes longitudinales pivotantes (25) dans la fente (28) des pièces de reprise (5) du support de charge (2). En continuant à faire pivoter les griffes longitudinales pivotantes (25) en position de préhension, les préhenseurs (6) viennent saisir le support de charge (2). Le support de charge (2) est alors maintenu à la fois par les préhenseurs (6) et éventuellement par des crochets transversaux pivotants (15, 16a, 16b) s'il était initialement positionné et verrouillé sur les parois verticales (7) de la structure porteuse (3).

Selon un mode de réalisation préféré, l'ensemble (1) selon l'invention comprend au moins un capteur de proximité, par exemple sous la forme d'un capteur inductif (38) logé dans chacun des préhenseurs (6), pour permettre au préhenseur (6) de détecter la présence ou non d'un support de charge (2). Ce capteur de proximité notifie au manipulateur (8) que ses préhenseurs (6) sont en contact ou non avec le support de charge (2). Chaque capteur inductif (38) informe seulement que le préhenseur (6) est en contact avec le support de charge (2) et que la séquence de sortie des griffes longitudinales pivotantes (25) peut être déclenchée. On notera que lors de la phase d'approche des préhenseurs (6) sur le support de charge (2), les griffes longitudinales pivotantes (25) sont préférentiellement sorties (dans la position représentée sur la figure 12) pour guider les préhenseurs (6).

Selon un mode de réalisation préféré, le support de charge (2) selon l'invention comprend également un dispositif de détection permettant de s'assurer que le doigt de verrouillage (18) d'un crochet transversal pivotant (15, 16a, 16b) est bien engagé dans un des orifices (13) ménagés dans les parois verticales (7) de la structure porteuse (3). Le support de charge (2) selon l'invention comprend préférentiellement un tel dispositif de détection pour les crochets transversaux pivotants (15) prévus au niveau d'une première extrémité de chacun des longerons (4), et pour les crochets transversaux pivotants (16a, 16b) prévus au niveau de l'autre extrémité de chacun des longerons (4). Bien que cela soit moins avantageux, cette détection peut également être réalisée visuellement par un opérateur.

Chacun des quatre dispositifs de détection comprend un capteur qui vérifie que dans chaque groupe au moins un crochet transversal pivotant (15, 16a, 16b) est engagé dans un des orifices (13) de la structure porteuse (3).

Les capteurs peuvent être de tout type, par exemple des capteurs d'effort ou des capteurs magnétiques (39) placés sur les préhenseurs (6), ces capteurs magnétiques (39) et coopérant avec des aimants (40) placés sur une partie mobile des crochets transversaux pivotants (15, 16a, 16b), sur une partie mobile des pièces d'actionnement (23), ou sur une pièce mobile reliée aux crochets transversaux pivotants (15, 16a, 16b) ou aux pièces d'actionnement (23).

Selon un mode de réalisation préféré représenté sur les figures, chaque dispositif de détection comprend un capteur magnétique (39) logé dans un des préhenseurs (6) et un aimant (40) fixé sur l'axe d'entraînement (17) des crochets transversaux pivotants (15, 16a, 16b), le capteur magnétique (39) et l'aimant (40) étant prévus pour être situés l'un au-dessus de l'autre dans un même axe vertical lorsque les préhenseurs (6) saisissent ou transportent le support de charge (2). En s'assurant que l'axe d'entraînement (17) est dans une position qui correspond à une position de verrouillage pour les crochets transversaux pivotants (15, 16a, 16b), ces dispositifs de détection permettent de s'assurer que lesdits crochets transversaux pivotants (15, 16a, 16b) sont bien engagés dans les orifices (13) de la structure porteuse (3), et donc que le support de charge (2) est bien verrouillé et immobilisé sur les parois verticales (7) de la structure porteuse (3).

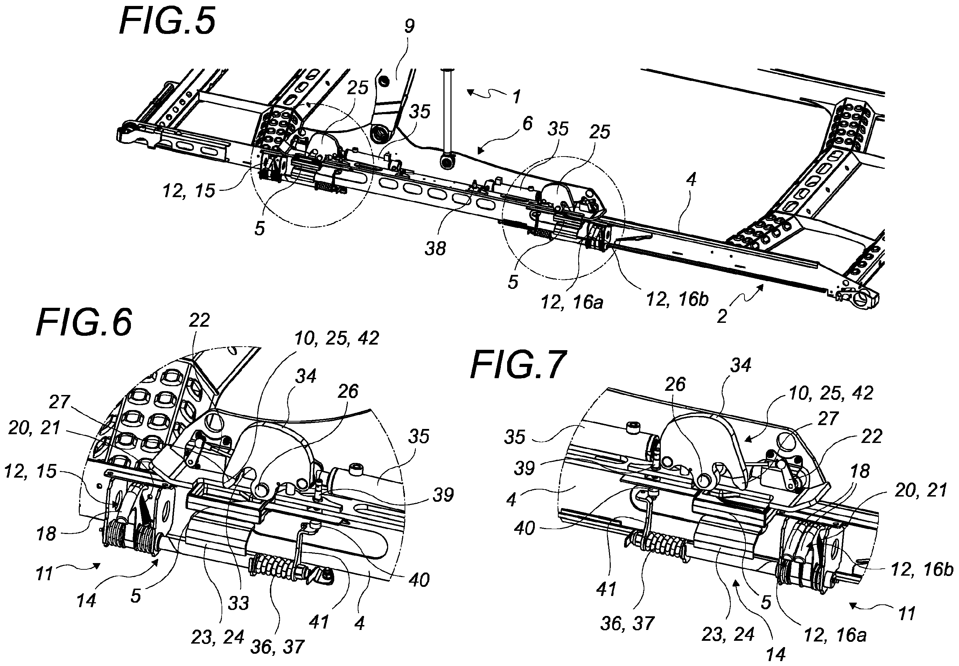

Dans le cas représenté à titre d'exemple sur les figures, un aimant (40) est monté sur l'axe d'entraînement (17) des crochets transversaux pivotants (15, 16a, 16b), au niveau de l'extrémité libre d'une extension verticale (41) qui prolonge verticalement vers le haut la partie supérieure de l'axe d'entraînement (17). Ainsi, lorsque l'axe d'entraînement (17) est pivoté dans la position correspondant à la position de verrouillage des crochets transversaux pivotants (15, 16a, 16b), cette extension verticale (41) se trouve en position haute et son aimant (40) se trouve à distance de détection du capteur magnétique (39) qui lui est associé (voire figures 5 à 10). De manière générale, la position de l'aimant (40) recopie la position du doigt de verrouillage (18) des crochets transversaux pivotants (15, 16a, 16b).

Pour des raisons de sécurité, le verrouillage du support de charge (2) sur les préhenseurs (6) est validé, car lorsque le support de charge (2) est verrouillé sur les préhenseurs (6), la pièce d'actionnement (23) est basculée par la partie bombée (34) des griffes longitudinales pivotantes (25) et l'éloignement de l'aimant (40) est détecté par le capteur magnétique (39). Le verrouillage du support de charge (2) sur les préhenseurs (6) peut également être testé par de légers déplacements du manipulateur (8).

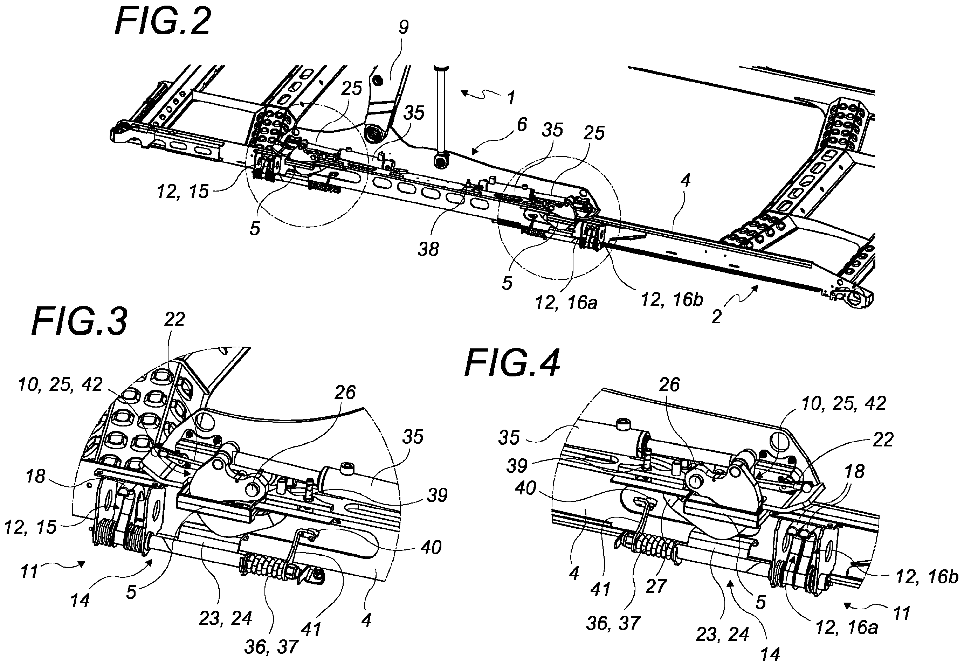

Par pivotement des griffes longitudinales pivotantes (25) en position d'actionnement, les crochets transversaux pivotants (15, 16a, 16b) sont alors déplacés en position escamotée (voire figures 2 à 4, et se référer à la cinématique du vérin et des griffes longitudinales pivotantes décrite précédemment). Ainsi, si le support de charge (2) était verrouillé sur les parois verticales (7) de la structure porteuse (3), il est maintenant déverrouillé et maintenu en position uniquement par les préhenseurs (6).

Il peut cependant arriver qu'un ou plusieurs des crochets transversaux pivotants (15, 16a, 16b) soit coincé.

En effet, lorsque les crochets transversaux pivotants (15, 16a, 16b) sont engagés dans un orifice (13) de la structure porteuse (3), ils supportent le poids de ladite structure porteuse (3) et leur basculement en position escamotée de déverrouillage peut être difficile de sorte que même si la pièce d'actionnement (23) mobile est sollicitée, le doigt de verrouillage (18) des crochets transversaux pivotants (15, 16a, 16b) peut rester engagé dans son orifice (13) respectif tandis que les organes d'entraînement (14) peuvent se déformer.

Ainsi, pour des raisons de sécurité, les organes d'entraînement (14) peuvent comporter des moyens de sécurité (46) élastiques ou débrayables qui relient la pièce d'actionnement (23) à l'axe d'entraînement (17) longitudinal des crochets transversaux pivotants (15, 16a, 16b), qui évitent un tel risque de déformation des organes d'entraînement (14).

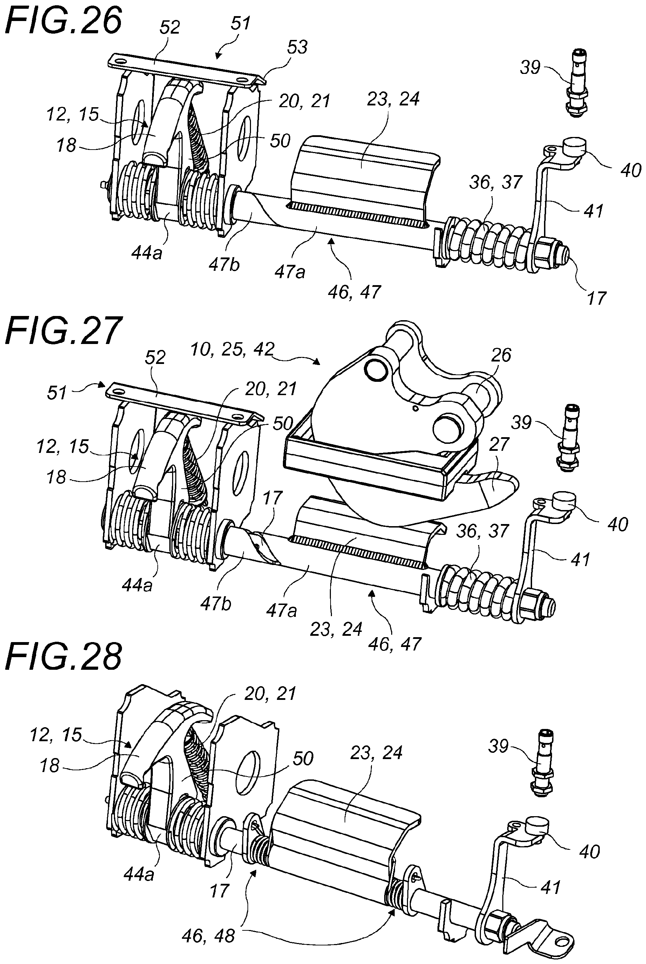

Selon la variante préférée représentée sur les figures 21, 26 et 27, la pièce d'actionnement (23) mobile est montée à rotation sur l'axe d'entraînement (17), les moyens de sécurité (46) sont débrayables et comprennent une came de commande (47) prévue dans l'axe d'entraînement (17) longitudinal. Cette came de commande (47) étant sous la forme d'un premier tube (47a) libre en rotation et en translation, à extrémité biseautée formant une rampe, plaqué par un dispositif élastique (36), par exemple un ressort de compression (37), contre l'extrémité biseautée, formant une rampe complémentaire, d'un second tube (47b) fixé sur l'axe d'entraînement (17) des crochets transversaux pivotants (15, 16a, 16b). Selon cette variante, si un doigt de verrouillage (18) des crochets transversaux pivotants (15, 16a, 16b) est coincé, l'axe d'entraînement (17) ne peut pas tourner. Lorsqu'une griffe longitudinale pivotante (25) vient appuyer sur la pièce d'actionnement (23) mobile, elle entraîne en rotation le premier tube (47a) sur laquelle ladite la pièce d'actionnement (23) mobile est fixée, et l'extrémité biseautée du premier tube (47a) vient en appui sur la rampe du second tube (47b). Le ressort de compression (37), pousse l'extrémité biseautée du premier tube (47a) sur celle du second tube (47b) en créant un couple dans le sens de déverrouillage des crochets transversaux pivotants (15, 16a, 16b). Une fois les crochets transversaux pivotants (15, 16a, 16b) décoincés, ils pourront donc s'ouvrir sous cet effet jusqu'à une position stable de contact des extrémités biseautées comme représenté sur la figure 26.

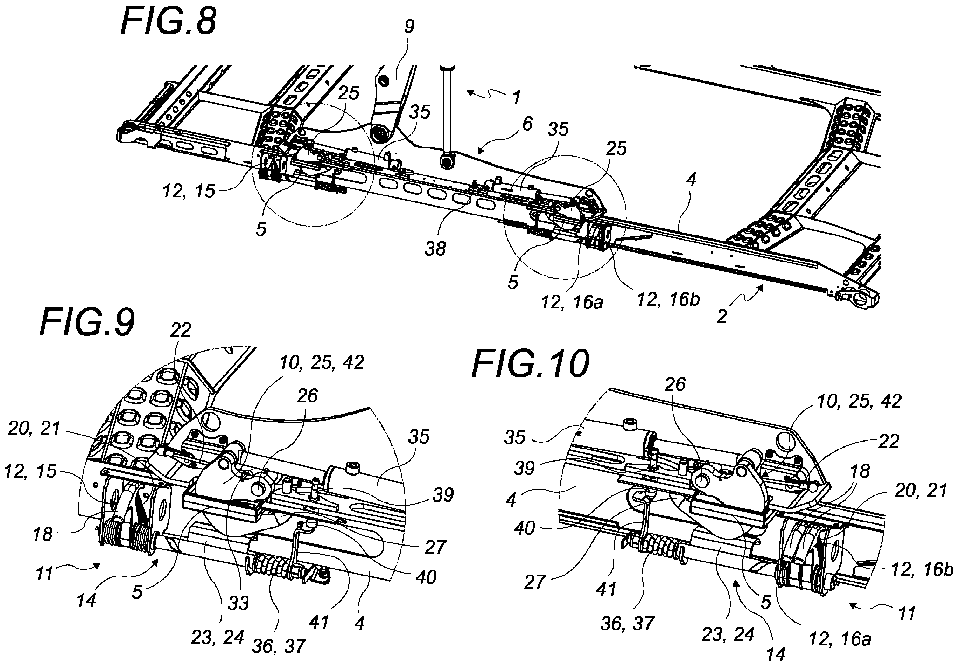

Les figures 8 à 10, 21 et 27 illustrent la situation dans laquelle la pièce d'actionnement (23) mobile est sollicitée pour faire pivoter les crochets transversaux pivotants (15, 16a, 16b) dans leur position escamotée de déverrouillage, mais où les crochets transversaux pivotants (15, 16a, 16b), sous charge, restent engagés dans son orifice (13). Sur ces figures, les moyens de sécurité (46) sont débrayés.

Selon une autre variante représentée sur la figure 28, la pièce d'actionnement (23) mobile est montée pivotante sur l'axe d'entraînement (17), les moyens de sécurité sont élastiques et comprennent des ressorts à torsion (48) prévus sur l'axe d'entraînement (17) longitudinal pour ramener la pièce d'actionnement (23) mobile en position de verrouillage des crochets transversaux pivotants (15, 16a, 16b). Selon cette variante, si un doigt de verrouillage (18) des crochets transversaux pivotants (15, 16a, 16b) est coincé, l'axe d'entraînement (17) ne peut pas tourner. Lorsqu'une griffe longitudinale pivotante (25) vient appuyer sur la pièce d'actionnement (23) mobile, ladite la pièce d'actionnement (23) mobile va tourner autour de l'axe d'entraînement (17) longitudinal sans entraîner les crochets transversaux pivotants (15, 16a, 16b) à rotation, mais en tendant les ressorts à torsion (48) qui génèrent ainsi un couple pour faire pivoter les crochets transversaux pivotants (15, 16a, 16b) dès qu'ils seront décoincés.

Ainsi, la pièce d'actionnement (23) des crochets transversaux pivotants (15, 16a, 16b) est montée en rappel élastique sur une came de commande (47) ou des ressorts à torsion (48) de manière à emmagasiner l'énergie de déverrouillage produite par les griffes longitudinales pivotantes (25) en appui sur les pièces d'actionnement (23) si les doigts de verrouillage (18) des crochets transversaux pivotants (15, 16a, 16b) sont bloqués dans les orifices (13) des parois verticales (7) de la structure porteuse (3). Ainsi, le manipulateur (8) peut soulager ces crochets transversaux pivotants (15, 16a, 16b) en vue de les libérer. L'ouverture est détectée par le capteur magnétique (39).

Une fois les crochets transversaux pivotants (15, 16a, 16b) déplacés en position escamotée, le manipulateur (8) peut alors déplacer librement le support de charge (2) et le positionner à l'endroit désiré entre les parois verticales (7) de la structure porteuse (3). Les préhenseurs (6) étant préférentiellement mobiles et inclinables, le support de charge (2) peut être placé dans la position et selon l'inclinaison souhaitées.

Une fois le support de charge (2) placé dans la position et l'inclinaison souhaitées, les griffes longitudinales pivotantes (25) sont pivotées de leur position d'actionnement vers leur position de préhension de sorte que les crochets transversaux pivotants (15, 16a, 16b) ne soient plus maintenus en position escamotée. Les crochets transversaux pivotants (15, 16a, 16b) sont alors forcés en position de verrouillage par leurs moyens de poussée élastique (20).

Lors de cette étape, par de très petits déplacements verticaux et/ou longitudinaux de la partie avant du support de charge (2), le manipulateur (8) aide les crochets transversaux pivotants basculants (15) à trouver un logement ou un orifice (13) de la structure porteuse (3) en vis-à-vis pour l'introduction de leur doigt de verrouillage (18).

On notera que lorsqu'un crochet transversal pivotant (15, 16a, 16b) ou au moins un crochet dans le cas d'un groupe de crochets transversaux pivotants (16a, 16b), pénètre dans un orifice (13), ceci est signalé par les capteurs magnétiques (39). Comme les griffes longitudinales pivotantes (25) sont indépendantes, on peut ouvrir totalement les griffes longitudinales pivotantes (25) qui correspondent aux crochets transversaux pivotants (15, 16a, 16b) qui sont verrouillés. Le manipulateur (8) peut alors imprimer des petits mouvements au niveau des crochets transversaux pivotants (15, 16a, 16b) qui ne sont pas encore en prise.

Lorsque le doigt de verrouillage (18) d'un des crochets transversaux pivotants basculants (15) se trouve en face d'un logement ou d'un orifice (13), ledit doigt de verrouillage (18) pénètre automatiquement à l'intérieur du logement ou de l'orifice (13), ce qui verrouille localement le support de charge (2) sur les parois verticales (7) de la structure porteuse (3) au niveau de l'extrémité avant des longerons (4) longitudinaux du support de charge (2).

Pour des raisons de sécurité, ce verrouillage est validé par le dispositif de détection.

Une fois ce premier verrouillage effectué et testé, le manipulateur (8) effectue à nouveau de très petits déplacements verticaux et/ou longitudinaux de la partie arrière du support de charge (2) jusqu'à ce qu'un des crochets transversaux pivotants fixes (16a, 16b) au sein de chaque paires de crochets transversaux pivotants fixes (16a, 16b) se trouve en vis-à-vis d'un logement ou d'un orifice (13) de la structure porteuse (3) et que son doigt de verrouillage (18) pénètre dans ledit logement ou orifice (13). Le fait que dans la partie arrière de ses longerons (4) longitudinaux le support de charge (2) comporte deux crochets transversaux pivotants fixes (16a, 16b) permet de multiplier les chances qu'un de ces crochets fixes (16a, 16b) se trouve en vis-à-vis d'un logement ou d'un orifice (13) de la structure porteuse (3) pour son verrouillage. De nombreux essais et calculs effectués par le déposant ont permis de déterminer que ce nombre de crochets transversaux pivotants fixes (16a, 16b) est suffisant lorsque l'écartement longitudinal entre deux crochets transversaux pivotants fixes (16a, 16b) est adapté à l'espacement et aux dimensions des logement ou orifices (13) de la structure porteuse (3).

Pour des raisons de sécurité, ce verrouillage est validé comme précédemment.

Lorsque le support de charge (2) est dans cette situation, il est positionné et verrouillé sur les parois verticales (7) de la structure porteuse (3) par quatre crochets transversaux pivotants (15, 16a, 16b) de ses longerons (4) longitudinaux, deux à l'avant de chaque côté et deux à l'arrière de chaque côté. Le support de charge (2) est en appuis latéral sur les parois verticales (7) de la structure porteuse (3), il est donc verrouillé dans toutes les directions.

Cette fixation par quatre points est fiable, stable et permet de positionner le support de charge (2) avec précision sur les parois verticales (7) de la structure porteuse (3), cette précision dépendant uniquement de l'espacement des orifices (13) de la structure porteuse (3). Ainsi, plus la structure porteuse (3) comporte d'orifices (13), plus les supports de charge amovibles (2) sont positionnés avec précision, mais cela implique également une plus grande fragilité pour la structure porteuse (3) au niveau de ses orifices (13).

Une fois le support de charge (2) ainsi positionné et verrouillé sur les parois verticales (7) de la structure porteuse (3), les griffes longitudinales pivotantes (25) sont pivotées de leur position de préhension vers leur position de libération du support de charge (2). Le support de charge (2) n'est plus maintenu par les préhenseurs (6) mais uniquement par les quatre crochets transversaux pivotants (15, 16a, 16b) qui restent engagés dans les orifices (13) de la structure porteuse (3). Le préhenseur (6) peut être dégagé du support de charge (2), par exemple pour aller en chercher une autre pour sa mise en place.

## Revendications

1. Support de charge (2) destiné à être fixé de manière amovible sur une structure porteuse (3) à parois verticales (7) pourvues d'une pluralité d'orifices (13), ledit support de charge (2) comportant deux longerons (4) longitudinaux et un système de verrouillage permettant de fixer le support de charge (2) à la structure porteuse (3) au moyen de pièces mobiles (12) s'engageant dans certains des orifices (13), ces pièces mobiles (12) étant disposées sur les côtés du support de charge (2) en quatre groupes, à savoir un groupe à l'avant et un groupe à l'arrière de chacun des côtés du support de charge (2), **caractérisé en ce que** :
- chaque groupe comprend au moins un crochet transversal pivotant (15, 16a, 16b), qui pivote transversalement entre une position escamotée de déverrouillage et une position pivotée de verrouillage en saillie transversale par rapport aux côtés du support de charge (2), position pivotée de verrouillage dans laquelle ledit crochet transversal pivotant (15, 16a, 16b) peut s'engager par son extrémité libre dans l'un des orifices (13) de la structure porteuse (3) ;
- les crochets transversaux pivotants (15) des deux groupes avant ou des deux groupes arrière sont également basculants longitudinalement ;
- chacun des crochets transversaux pivotants (15, 16a, 16b) est individuellement précontraint en position pivotée de verrouillage par des moyens de poussée élastique (20) ;
- chacun des crochets transversaux pivotants (15, 16a, 16b) comprend un corps principal (50) et un doigt de verrouillage (18) ;
- le support de charge (2) comporte en outre des organes d'entraînement (14) qui font passer les crochets transversaux pivotants (15, 16a, 16b) de la position pivotée de verrouillage à la position escamotée de déverrouillage.

2. Support de charge (2) selon la revendication 1, **caractérisé en ce que** les groupes qui comprennent les crochets transversaux pivotants (15) basculants longitudinalement ne comprennent qu'un seul crochet transversal pivotant (15) par groupe.

3. Support de charge (2) selon la revendication 1 ou la revendication 2, **caractérisé en ce que** les groupes qui ne comprennent pas de crochets transversaux pivotants (15) basculants longitudinalement comprennent au moins deux, et de préférence uniquement deux, crochets transversaux pivotants (16a, 16b) transversalement par groupe.

4. Support de charge (2) selon l'une quelconque des revendications précédentes, **caractérisé en ce que** l'extrémité libre de chaque doigt de verrouillage (18) est conformée en ergot de verrouillage (19), cet ergot de verrouillage (19) se prolongeant vers le bas lorsque le crochet transversal pivotant (15, 16a, 16b) est en position pivotée de verrouillage.

5. Support de charge (2) selon l'une quelconque des revendications précédentes, **caractérisé en ce que** chaque crochet transversal pivotant (15, 16a, 16b) comprend une plage d'appui (19') sensiblement plane située en sous-face du doigt de verrouillage (18) entre le corps principal (50) et l'extrémité libre du doigt de verrouillage (18).

6. Support de charge (2) selon l'une quelconque des revendications précédentes, **caractérisé en ce que** les organes d'entraînement (14) sont montés dans les longerons (4) du support de charge (2) et **en ce qu'**ils comprennent un axe d'entraînement (17) fixé aux crochets transversaux pivotants (15, 16a, 16b) et une pièce d'actionnement (23) montée sur ledit axe d'entraînement (17).

7. Support de charge (2) selon la revendication précédente, **caractérisé en ce que** la pièce d'actionnement (23) comprend une tôle excentrique, (24), une palette ou un levier monté(e) sur l'axe d'entraînement (17) de manière déportée latéralement par rapport à l'axe longitudinal dudit axe d'entraînement (17).

8. Support de charge (2) selon l'une quelconque des revendications 6 à 7, **caractérisé en ce qu'**il comprend des moyens de sécurité (46) élastiques ou débrayables qui relient chaque pièce d'actionnement (23) à l'axe d'entraînement (17) sur lequel elle est montée.

9. Ensemble (1) de positionnement, chargement et déchargement d'un support de charge (2) sur une structure porteuse (3) à parois verticales (7) pourvues d'orifices (13), ledit ensemble comprenant un support de charge (2) et un manipulateur (8) capable de saisir le support de charge (2), de le déplacer, de l'orienter et de le déposer dans une position de chargement sur la structure porteuse (3), ledit manipulateur (8) étant pourvu pour cela de deux préhenseurs (6) comportant chacun des moyens d'accrochage (10) prévus pour s'engager avec le support de charge (2), **caractérisé en ce que** le support de charge (2) est conforme à l'une quelconque des revendications précédentes.

10. Ensemble (1) selon la revendication précédente, **caractérisé en ce que** chaque préhenseur (6) comprend des moyens d'actionnement (42) qui viennent en position de coopération mécanique avec les organes d'entraînement (14) du support de charge (2) pour commander le pivotement des crochets transversaux pivotants (15, 16a, 16b) en position de déverrouillage.

11. Ensemble (1) selon la revendication précédente, **caractérisé en ce que** les moyens d'actionnement (42) commandent le pivotement des crochets transversaux pivotants (15) des deux groupes avant, indépendamment du pivotement des crochets transversaux pivotants (16a, 16b) des deux groupes arrière et vice-versa.

12. Ensemble (1) selon la revendication 10 ou 11, **caractérisé en ce que** les moyens d'actionnement (42) des préhenseurs (6) sont confondus avec ou situés sur les moyens d'accrochage (10) des préhenseurs.

13. Ensemble (1) selon la revendication précédente, **caractérisé en ce que** les moyens d'accrochage (10) comprennent des griffes longitudinales pivotantes (25) qui réalisent l'accrochage des préhenseurs au support de charge (2) par une première partie de leur mouvement de pivotement longitudinal, puis arrivent en position de coopération mécanique avec les organes d'entraînement (14) du support de charge (2) par une deuxième partie de leur mouvement de pivotement longitudinal.

14. Ensemble (1) selon l'une quelconque des revendications 9 à 13, **caractérisé en ce que** les deux longerons (4) longitudinaux du support de charge (2) sont équipés chacun d'une pièce de reprise (5) pour la préhension dudit support de charge (2) par les moyens d'accrochage (10) des préhenseurs, chaque pièce de reprise (5) comportant une fente (28) longitudinale prolongée par une zone ouverte (31) de plus grandes dimensions que ladite fente (28).

15. Ensemble (1) selon l'une quelconque des revendications 9 à 14, **caractérisé en ce qu'**il comporte en outre un dispositif de détection qui vérifie que dans chaque groupe au moins un crochet transversal pivotant (15, 16a, 16b) est engagé dans un des orifices (13) de la structure porteuse (3).

16. Ensemble (1) selon la revendication précédente, **caractérisé en ce que** le dispositif de détection comprend soit des capteurs d'effort, soit des capteurs magnétiques (39) placés sur les préhenseurs (6) et coopérant avec des aimants (40) placés sur une partie mobile des crochets transversaux pivotants (15, 16a, 16b), sur une partie mobile des pièces d'actionnement (23), ou sur une pièce mobile reliée aux crochets transversaux pivotants (15, 16a, 16b) ou aux pièces d'actionnement (23).

17. Procédé de fixation amovible d'un support de charge (2) sur une structure porteuse (3) à parois verticales (7) pourvues d'une pluralité d'orifices (13) au moyen d'un ensemble (1) selon les revendications 11 et 15, **caractérisé en ce que** :
- les moyens d'accrochage (10) des préhenseurs (6) s'engagent avec le support de charge (2) pour lier le manipulateur (8) au support de charge (2) ;
- les moyens d'actionnement (42) des préhenseurs (6) commandent le pivotement des crochets transversaux pivotants (15, 16a, 16b) en position escamotée de déverrouillage ;
- le manipulateur (8) oriente et déplace le support de charge (2) jusqu'en position de chargement sur la structure porteuse (3) ;
- les moyens d'actionnement (42) des préhenseurs (6) commandent le pivotement en position pivotée de verrouillage des crochets transversaux pivotants (15, 16a, 16b) appartenant aux deux groupes de crochets transversaux pivotants (15) basculants longitudinalement, désignés en tant que premiers groupes ;
- le manipulateur (8) effectue de petits mouvements du support de charge (2) jusqu'à ce que ce qu'au moins un crochet transversal pivotant (15) basculant longitudinalement de chacun des premiers groupes soit engagé dans un orifice (13) de la structure porteuse (3) ;
- le dispositif de détection vérifie qu'au moins un crochet transversal pivotant (15) basculant longitudinalement de chacun des premiers groupes est correctement engagé dans un orifice (13) de la structure porteuse (3) ;
- les moyens d'actionnement (42) des préhenseurs (6) commandent le pivotement en position pivotée de verrouillage des crochets transversaux pivotants (16a, 16b) appartenant aux deux autres groupes de crochets transversaux pivotants (16a, 16b), désignés en tant que deuxièmes groupes ;
- le manipulateur (8) effectue de petits mouvements du support de charge (2), le support de charge (2) étant accroché à la structure porteuse (3) par des crochets transversaux pivotants (15) des premiers groupes qui basculent longitudinalement pour autoriser des mouvements longitudinaux du support de charge (2), jusqu'à ce que ce qu'au moins un crochet transversal pivotant (16a, 16b) de chacun des deuxièmes groupes soit engagé dans un orifice (13) de la structure porteuse (3) ;
- le dispositif de détection vérifie qu'au moins un crochet transversal pivotant (16a, 16b) de chacun des deuxièmes groupes est correctement engagé dans un orifice (13) de la structure porteuse (3) ;
- les moyens d'accrochage (10) des préhenseurs (6) se désengagent du support de charge (2) et le manipulateur (8) libère le support de charge (2).

## Patentansprüche

1. Lastenträger (2), dazu vorgesehen, abnehmbar auf einer Tragkonstruktion (3) mit vertikalen Wänden (7), versehen mit einer Vielzahl von Öffnungen (13), befestigt zu werden, dabei umfasst dieser Lastenträger (2) zwei Längsträger (4) und ein Verriegelungssystem, mit dem der Lastenträger (2) mittels beweglicher Teile (12) auf der Tragkonstruktion (3) befestigt werden kann, die in bestimmte Öffnungen (13) einrasten, diese beweglichen Teile (12) sind auf den Seiten des Lastenträgers (2) in vier Gruppen angeordnet, und zwar eine Gruppe vorne und eine Gruppe hinten an jeder der Seiten des Lastenträgers (2), **dadurch gekennzeichnet, dass**:
- jede Gruppe mindestens einen schwenkbaren Querhaken (15, 16a, 16b) enthält, der in Querrichtung zwischen einer ausgeklappten Entriegelungsposition und einer eingeklappten Verriegelungsposition, die quer zu den Seiten des Lastenträgers (2) herausragt, geschwenkt werden kann, in der eingeklappten Verriegelungsposition kann dieser schwenkbare Querhaken (15, 16a, 16b) mit seinem freien Ende in eine der Öffnungen (13) der Tragkonstruktion (3) greifen;
- der Lastenträger (2) enthält außerdem Antriebsorgane (14), die die schwenkbaren Querhaken (15, 16a, 16b) aus der eingeklappten Verriegelungsposition in die ausgeklappte Entriegelungsposition verstellen.
- Die schwenkbaren Querhaken (15) der beiden Gruppen vorne oder hinten, sind auch in Längsrichtung schwenkbar;
- jeder der schwenkbaren Querhaken (15, 16a, 16b) ist einzeln, durch elastische Schubelemente (20) in der eingeklappten Verriegelungsposition vorgespannt;
- jeder der schwenkbaren Querhaken (15, 16a, 16b) enthält einen Hauptkörper (50) und einen Verriegelungsstift (18);
- der Lastenträger (2) enthält außerdem Antriebsorgane (14), die die schwenkbaren Querhaken (15, 16a, 16b) aus der eingeklappten Verriegelungsposition in die ausgeklappte Entriegelungsposition verstellen.

2. Lastenträger (2) nach Anspruch 1, **dadurch gekennzeichnet, dass** die Gruppen, die die schwenkbaren Querhaken (15), die in Längsrichtung gekippt werden können, nur einen einzigen schwenkbaren Querhaken (15) pro Gruppe enthalten.

3. Lastenträger (2) nach Anspruch 1 oder Anspruch 2, **dadurch gekennzeichnet, dass** die Gruppen, die keine in Längsrichtung kippbaren, schwenkbaren Querhaken (15) enthalten, mindestens zwei, und vorzugsweise nur zwei, in Querrichtung schwenkbare Querhaken (16a, 16b) pro Gruppe enthalten.

4. Lastenträger (2) nach irgendeinem der vorangehenden Ansprüche, **dadurch gekennzeichnet, dass** das freie Endstück jedes Verriegelungsstiftes (18) als Verriegelungsnase (19) ausgeführt ist, diese Verriegelungsnase (19) verlängert sich nach unten, wenn der schwenkbare Querhaken (15, 16a, 16b) sich in der eingeklappten Verriegelungsposition befindet.

5. Lastenträger (2) nach irgendeinem der vorangehenden Ansprüche, **dadurch gekennzeichnet, dass** jeder schwenkbare Querhaken (15, 16a, 16b) eine im Wesentlichen ebene Auflagefläche (19') enthält, die auf der Unterseite des Verriegelungsstiftes (18) zwischen dem Hauptkörper (50) und dem freien Endstück des Verriegelungsstiftes (18) angeordnet ist.

6. Ansprüche, **dadurch gekennzeichnet, dass** die Antriebsorgane (14) in den Längsträgern (4) des Lastenträgers (2) montiert sind und dass sie eine Antriebsachse (17) umfassen, die an den schwenkbaren Querhaken (15, 16a, 16b) befestigt ist sowie ein Betätigungsteil (23), das auf dieser Antriebsachse (17) montiert ist.

7. Lastenträger (2) nach dem vorangehenden Anspruch, **dadurch gekennzeichnet, dass** das Betätigungsteil (23) ein exzentrisches Blech, (24), eine Palette oder einen Hebel enthält, montiert auf der Antriebsachse (17), seitlich versetzt gegenüber der Längsachse dieser Antriebsachse (17).

8. Lastenträger (2) nach irgendeinem der vorangehenden Ansprüche 6 bis 7, **dadurch gekennzeichnet, dass**, er elastische oder ausrückbare Sicherheitselemente (46) enthält, die jedes Betätigungsteil (23) mit der Antriebsachse (17) verbinden, an der sie montiert sind.

9. Positionierungseinheit (1), Auf- und Abladen eines Lastenträgers (2) auf einer Tragkonstruktion (3) mit vertikalen Wänden (7), versehen mit Öffnungen (13), wobei diese Einheit einen Lastenträger (2) und einen Manipulator (8) enthält, der in der Lage ist, den Lastenträger (2) zu ergreifen, ihn zu versetzen, ihn auszurichten und ihn in eine Ladeposition auf der Tragkonstruktion (3) zu setzen, dieser Manipulator (8) ist dazu mit zwei Greifern (6) versehen, der jeweils Anschlagmittel (10) umfassen, dazu vorgesehen, in den Lastenträger (2) zu greifen, **dadurch gekennzeichnet, dass** der Lastenträger (2) irgendeinem der vorangehenden Ansprüche entspricht.

10. Einheit (1) nach dem vorangehenden Anspruch, **dadurch gekennzeichnet, dass** jeder Greifer (6) Betätigungselemente (42) umfasst, die mechanisch mit den Antriebsorganen (14) des Lastenträgers (2) zusammenarbeiten, um das Kippen der schwenkbaren Querhaken (15, 16a, 16b) in die Entriegelungsposition zu steuern.

11. Einheit (1) nach dem vorangehenden Anspruch, **dadurch gekennzeichnet, dass** die Betätigungselemente (42) das Kippen der schwenkbaren Querhaken (15) der beiden vorderen Gruppen steuern, unabhängig vom Kippen der schwenkbaren Querhaken (16a, 16b) der beiden hinteren Gruppen und umgekehrt.

12. Einheit (1) nach Anspruch 10 oder 11, **dadurch gekennzeichnet, dass** die Betätigungselemente (42) der Greifer (6) den Anschlagmitteln (10) der Greifer entsprechen oder auf ihnen angeordnet sind.

13. Einheit (1) nach dem vorangehenden Anspruch, **dadurch gekennzeichnet, dass** die Anschlagmittel (10) schwenkbare Längsklauen (25) umfassen, über die in einem ersten Teil ihrer Längsbewegung die Greifer am Lastenträger (2) eingehängt werden können und die dann in einem zweiten Teil ihrer Längsbewegung in eine Position der mechanischen Zusammenarbeit mit den Antriebsorganen (14) des Lastenträgers (2) gelangen.

14. Einheit (1) nach irgendeinem der vorangehenden Ansprüche 9 bis 13, **dadurch gekennzeichnet, dass** die beiden Längsträger (4) des Lastenträgers (2) jeweils mit einem Rückstellteil (5) zum Greifen dieses Lastenträgers (2) über die Anschlagmittel (10) der Greifer ausgerüstet sind, jedes Rückstellteil (5) umfasst einen offenen Schlitz (28), der durch eine offene Zone (31) verlängert ist, die größere Abmessungen hat, als dieser Schlitz (28).

15. Einheit (1) nach einem beliebigen der Ansprüche 9 bis 14, **dadurch gekennzeichnet, dass** er außerdem eine Erkennungsvorrichtung enthält, die überprüft, ob in jeder Gruppe mindestens ein schwenkbarer Querhaken (15, 16a, 16b) in einer der Öffnungen (13) der Tragkonstruktion (3) eingerastet ist.

16. Einheit (1) nach dem vorangehenden Anspruch, **dadurch gekennzeichnet, dass** die Erkennungsvorrichtung entweder Kraft- oder magnetische Sensoren (39) enthält, angeordnet auf den Greifern (6), die mit Magneten (40) zusammenarbeiten, die auf einem mobilen Teil der schwenkbaren Querhaken (15, 16a, 16b), einem mobilen Teil der Antriebselemente (23), oder auf einem mobilen Teil, verbunden mit den schwenkbaren Querhaken (15, 16a, 16b) oder den Antriebselementen (23) verbunden sind.

17. Verfahren zur abnehmbaren Befestigung eines Lastenträgers (2), auf einer Tragkonstruktion (3) mit vertikalen Wänden (7) versehen mit einer Vielzahl von Öffnungen (13), mittels einer Einheit (1) nach den Ansprüchen 11 und 15, **dadurch gekennzeichnet, dass**:
- die Anschlagmittel (10) der Greifer (6) in den Lastenträger (2) greifen, um den Manipulator (8) mit dem Lastenträger (2) zu verbinden;
- die Betätigungselemente (42) der Greifer (6) dabei das Kippen der schwenkbaren Querhaken (15, 16a, 16b) in die ausgeklappte Entriegelungsposition steuern;
- der Manipulator (8) den Lastenträger (2) ausrichtet und bis zur Ladeposition auf der Tragkonstruktion (3) verschiebt;
- die Betätigungselemente (42) des Greifers (6) das Kippen in die eingeklappte Verriegelungsposition der schwenkbaren Querhaken (15, 16a, 16b) steuern, die zu den beiden Gruppen schwenkbarer Querhaken (15) gehören, die in Längsrichtung kippen und als solche als erste Gruppen bezeichnet werden;
- der Manipulator (8) kleine Bewegungen des Lastenträgers (2) ausführt, bis mindestens ein in Längsrichtung kippender schwenkbarer Querhaken (15) jeder der ersten Gruppen in eine Öffnung (13) der Tragkonstruktion (3) greift;
- die Erkennungsvorrichtung überprüft, dass mindestens ein in Längsrichtung kippender schwenkbarer Querhaken (15) jeder der ersten Gruppen richtig in eine Öffnung (13) der Tragkonstruktion (3) greift;
- die Betätigungselemente (42) der Greifer (6) das Kippen in die eingeklappte Verriegelungsposition der schwenkbaren Querhaken (16a, 16b) steuern, die zu den anderen Gruppen der schwenkbaren Haken (16a, 16b), gehören und als solche als zweite Gruppen bezeichnet werden;
- der Manipulator (8) kleine Bewegungen des Lastenträgers (2) ausführt, wobei der Lastenträger (2) in der Tragkonstruktion (3) über schwenkbare Querhaken (15) der in Längsrichtung kippenden schwenkbaren Gruppen eingehängt ist, um Längsbewegungen des Lastenträgers (2) zu ermöglichen, bis mindestens ein schwenkbarer Querhaken (16a, 16b) jeder der zweiten Gruppen in eine Öffnung (13) der Tragkonstruktion (3) eingerastet ist;
- die Erkennungsvorrichtung überprüft, dass mindestens ein in Querrichtung kippender schwenkbarer Querhaken (16a, 16b) jeder der zweiten Gruppen richtig in eine Öffnung (13) der Tragkonstruktion (3) greift;
- die Anschlagmittel (10) der Greifer (6) sich vom Lastenträger (2) lösen und der Manipulator (8) den Lastenträger (2) freigibt.

## Claims

1. Load support (2) intended to be removably fixed to a bearing structure (3) with vertical walls (7) provided with a plurality of orifices (13), said load support (2) comprising two longitudinal beams (4) and a locking system making it possible to fix the load support (2) to the bearing structure (3) by means of movable parts (12) engaging in some of the orifices (13), these movable parts (12) being arranged on the sides of the load support (2) in four groups, namely a group at the front and a group at the rear of each of the sides of the load support (2), **characterised in that**:
- each group comprises at least one pivoting transverse hook (15, 16a, 16b), which pivots transversally between a retracted unlocking position and a pivoted locking position, transversally projecting with respect to the sides of the loads support (2), pivoted locking position wherein said pivoting transverse hook (15, 16a, 16b) can engage by its free end in one of the orifices (13) of the bearing structure (3);
- the pivoting transverse hooks (15) of the two front groups or of the two rear groups are also longitudinally tilted;
- each of the pivoting transverse hooks (15, 16a, 16b) is individually prestressed in the pivoted locking position by elastic thrust means (20);
- each of the pivoting transverse hooks (15, 16a, 16b) comprises a main body (50) and a locking finger (18);
- the load support (2) further comprises drive members (14) which make the pivoting transverse hooks (15, 16a, 16b) pass from the pivoted locking position to the retracted unlocking position.

2. Load support (2) according to claim 1, **characterised in that** the groups which comprise longitudinally tilting pivoting transverse hooks (15) only comprise one single pivoting transverse hook (15) per group.

3. Load support (2) according to claim 1 or 2, **characterised in that** the groups which do not comprise any longitudinally tilting pivoting transverse hooks (15) comprise at least two, and preferably only two, pivoting transverse hooks (16a, 16b) transversally per group.

4. Load support (2) according to any one of the preceding claims, **characterised in that** the free end of each locking finger (18) is shaped as a locking tab (19), this locking tab (19) being extended downwards when the pivoting transverse hook (15, 16a, 16b) is in the pivoted locking position.

5. Load support (2) according to any one of the preceding claims, **characterised in that** each pivoting transverse hook (15, 16a, 16b) comprises a substantially flat rest area (19') located on the underside of the locking finger (18) between the main body (50) and the free end of the locking finger (18).

6. Load support (2) according to any one of the preceding claims, **characterised in that** the drive members (14) are mounted in the beams (4) of the load support (2) and **in that** they comprise a drive axis (17) fixed to the pivoting transverse hooks (15, 16a, 16b) and an actuation part (23) mounted on said drive axis (17).

7. Load support (2) according to the preceding claim, **characterised in that** the actuation part (23) comprises an eccentric sheet (24), a pallet or a lever mounted on the drive axis (17) laterally remote with respect to the longitudinal axis of said drive axis (17).

8. Load support (2) according to any one of claims 6 to 7, **characterised in that** it comprises elastic or disengageable safety means (46) which connect each actuation part (23) to the drive axis (17) on which it is mounted.

9. Positioning, loading and unloading assembly (1) of a load support (2) on a bearing structure (3) with vertical walls (7) provided with orifices (13), said assembly comprising a load support (2) and manipulator (8) capable of gripping the load support (2), of moving it, of orienting it and of placing it in a loading position on the bearing structure (3), said manipulator (8) being provided for that of two grippers (6), each comprising hooking means (10) provided to engage with the load support (2), **characterised in that** the load support (2) is in accordance with any one of the preceding claims.

10. Assembly (1) according to the preceding claim, **characterised in that** each gripper (6) comprises actuation means (42) which come into the mechanical engagement position with the drive members (14) of the load support (2) to control the pivoting of the pivoting transverse hooks (15, 16a, 16b) in the unlocking position.

11. Assembly (1) according to the preceding claim, **characterised in that** the actuation means (42) control the pivoting of the pivoting transverse hooks (15) of the two front groups, independently of the pivoting of the pivoting transverse hooks (16a, 16b) of the two rear groups and vice versa.

12. Assembly (1) according to claim 10 or 11, **characterised in that** the actuation means (42) of the grippers (6) are combined with or located on the hooking means (10) of the grippers.

13. Assembly (1) according to the preceding claim, **characterised in that** the hooking means (10) comprise pivoting longitudinal claws (25) which hook the grippers to the load support (2) by a first part of their longitudinal pivoting movement, then arrive in the mechanical engagement position with the drive members (14) of the load support (2) by a second part of their longitudinal pivoting movement.

14. Assembly (1) according to any one of claims 9 to 13, **characterised in that** the two longitudinal beams (4) of the load support (2) are each equipped with a retrieval part (5) for gripping said load support (2) by the hooking means (10) of the grippers, each retrieval part (5) comprising a longitudinal slot (28) extended by an open zone (31) of greater dimensions than said slot (28).

15. Assembly (1) according to any one of claims 9 to 14, **characterised in that** it further comprises a detection device which verifies that in each group, at least one pivoting transverse hook (15, 16a, 16b) is engaged in one of the orifices (13) of the bearing structure (3).

16. Assembly (1) according to the preceding claim, **characterised in that** the detection device comprises either force sensors, or magnetic sensors (39) placed on the grippers (6) and engaging with magnets (40) placed on a movable part of the pivoting transverse hooks (15, 16a, 16b), on a movable part of the actuation parts (23), or on a movable part connected to the pivoting transverse hooks (15, 16a, 16b) or to the actuation parts (23).

17. Method for removably fixing a load support (2) on a bearing structure (3) with vertical walls (7) provided with a plurality of orifices (13) by means of an assembly (1) according to claims 11 and 15, **characterised in that**:
- the means for hooking (10) the grippers (6) engage with the load support (2) to connect the manipulator (8) to the load support (2);
- the actuation means (42) of the grippers (6) control the pivoting of the pivoting transverse hooks (15, 16a, 16b) in the retracted unlocking position;
- the manipulator (8) orients and moves the load support (2) to the loading position on the bearing structure (3);
- the actuation means (42) of the grippers (6) control the pivoting in the pivoted locking position of the pivoting transverse hooks (15, 16a, 16b) belonging to the two groups of longitudinally tilting pivoting transverse hooks (15), named as first groups;
- the manipulator (8) performs small movements of the load support (2) until at least one longitudinally tilting pivoting transverse hook (15) of each of the first groups is engaged in an orifice (13) of the bearing structure (3);
- the detection device verifies that at least one longitudinally tilting pivoting transverse hook (15) of each of the first groups is correctly engaged in an orifice (13) of the bearing structure (3);
- the actuation means (42) of the grippers (6) control the pivoting in the pivoted locking position of the pivoting transverse hooks (16a, 16b) belonging to the two other groups of pivoting transverse hooks (16a, 16b), named as second groups;
- the manipulator (8) performs small movements of the load support (2), the load support (2) being hooked to the bearing structure (3) by pivoting transverse hooks (15) of the first groups which longitudinally tilt to enable longitudinal movements of the load support (2), until at least one pivoting transverse hook (16a, 16b) of each of the second groups is engaged in an orifice (13) of the bearing structure (3);
- the detection device verifies that at least one pivoting transverse hook (16a, 16b) of each of the second groups is correctly engaged in an orifice (13) of the bearing structure (3);
- the means for hooking (10) of the grippers (6) are disengaged from the load support (2) and the manipulator (8) releases the load support (2).
